# EUROPEAN PATENT SPECIFICATION

(11) **EP 1 625 453 B1**
(45) Date of publication and mention of the grant of the patent: **26.12.2007**
(21) Application number: 04760969.8
(22) Date of filing: 11.05.2004
(51) Int. Cl.: G05B 23/02, G05B 19/418

(54) **ASSET LIFE CYCLE MANAGEMENT METHOD AND APPARATUS**
ASSET-LEBENSZYKLUSVERWALTUNGSVERFAHREN UND VORRICHTUNG
PROCEDE ET APPAREIL DE GESTION DU CYCLE DE VIE D'UN BIEN

(30) Priority: 12.05.2003 US 469846 P
(43) Date of publication of application: 15.02.2006
(73) Proprietor: ABB Inc, Wickliffe, OH 44092-2530 (US); ABB AB, 721 83 Västerås (SE)
(72) Inventor: STAKE, Niklas, Göteborg (SE); RENULF, Andreas, 8800 Thalwil (CH); HOAG, Michael, CH- 8916 Jonen (CH); GOINS, Kirk, Rochester Hills, MI 48306 (US); POORMAN, Anne, Lyndhurst, OH 44124 (US); GRAMBERG, Oliver, c/o ABB Inc., 68526 Ladenburg (DE); LISIEWSKI, Stephen, Cleveland, OH 44107 (US)
(74) Representative: Marks, Frank
(86) International application number: PCT/US2004/014582
(87) International publication number: WO 2004/102295

(56) References cited:
- EP-A2- 1 128 245
- FR-A1- 2 729 799
- US-B1- 6 463 352
- ROSEMOUNT INC.: "ROSEMOUNT INC. 1998 PRODUCT CATALOG ASSET MANAGEMENT SOLUTIONS PRODUCTS" ROSEMOUNT INC. CATALOG, 10 October 1998 (1998-10-10), XP002240119

## Description

### 1. Field of the Invention

This invention relates to one or more assets in one or more plants of an enterprise and more particularly to the management of those assets during their life cycle.

### 2. Description of the Prior Art

A business enterprise may have one or more plants that each produce a single product, for example, electricity, or more than one product, for example, different models of an automobile. Each plant uses a wide variety of assets in that production. An asset as that term is used herein is an apparatus that performs work and thus has value to an enterprise.

Clearly the enterprise would like to use an asset for as long as possible before maintenance is performed on the asset. Thus the enterprise is interested in knowing when maintenance, both predictive and preventive, should be performed on an asset as well as information about the asset's effectiveness, productivity, configuration, documentation etc.

One example of a system that provides to an enterprise information about the maintenance of an asset such as a valve is described in U.S. Patent No. 6,317,701 ("the '701 Patent"). The system described in the '701 Patent only collects data indicative of alarms and faults for the asset and does not collect data indicative of actual usage of the asset.

Further the system described in the '701 Patent only focuses on predictive and preventive maintenance of the asset. Thus, the system of the '701 Patent does not provide to either the user of the asset or the manufacturer of the asset, that is, the supplier of the asset to the user enterprise, additional information about the asset such as asset effectiveness, productivity etc. This additional information is provided by the system of the present invention.

Further the maintenance management system described in the '701 Patent is linked to a process control system so that actions affecting the process in which the asset is used can be taken in real time. In contrast thereto, the system of the present invention is not linked to any process automation system used by the enterprise and the results of the system of the present invention are not used to undertake actions in real time that affect the process in which the asset is used.

The system of the '701 Patent is only for use by the user of the asset whereas the system of the present invention can be used not only by the user of the asset but also by the manufacturer of the asset, that is, the supplier of the asset to the user enterprise.

The present invention is in the form of a server that can be hosted by the asset manufacturer, that is, the supplier of the asset to the user enterprise, or can be located at a user enterprise facility. The hosting of a server by the asset manufacturer(supplier) allows the supplier as is described below to not only provide predictive and preventive maintenance information to the user but other information and benefits as well.

The supplier has access to real production data about the actual life of an asset at a user site and by analyzing this data can offer services back to the user. The type of services can be predictive maintenance, preventive maintenance, recommendations on the usage of the asset, machine state analysis to analyze productivity, benchmark analysis between assets in the user's plants, usage history of the asset when re-commissioning and asset administration. These same user's plants, usage history of the asset when re-commissioning and asset administration. These same features and benefits are provided to the asset user when the server is located at an enterprise facility or at a facility external to the enterprise that is not hosted by the asset supplier. When the server is hosted at the asset supplier the supplier can use the real production data to optimize future products for the specific environment and provide the user with a benchmark analysis between the user's assets and the use of the same assets by other users. Each of these features and benefits of the present invention are described in more detail below.

Another method for managing a plurality of assets used by an enterprise is disclosed in U.S. Patent No. 6,463,352. Under the described method data from each of said plurality of assets are recorded during operation and transferred to an enterprise level server. The recorded data are available for viewing for each of said plurality of assets and one or more of life cycle phases thereof.

### Summary of the Invention

A method for managing an asset used by an enterprise, said asset having a life cycle with a plurality of phases. The method comprises:
recording data from said asset during its operation in one or more of said plurality of life cycle phases and information about said asset in a server associated with a facility in which said asset is located;
transferring said recorded data and information to an enterprise level server; and
allowing said recorded data and information to be available for viewing either at said local server or said enterprise level server in a form that provides information to a user of said asset about said asset and one or more of said plurality of life cycle phases of said asset.

A method for managing a plurality of assets used by an enterprise, each of said plurality of assets having an associated life cycle with a plurality of phases. The method comprises:
recording data from each of said plurality of assets during operation of each said plurality of assets in one or more of said associated plurality of life cycle phases and information about said asset in a server associated with a facility in which each of said plurality of assets is located;
transferring said recorded data to an enterprise level server; and
allowing said recorded data and information to be available for viewing for each of said plurality of assets either at said local server or said enterprise level server in a form that provides to a user of each of said plurality of assets information about each of said plurality of assets and one or more of said life cycle phases associated with each of said plurality of assets.

In an enterprise having one or more facilities, each of said one or more facilities having one or more assets, each of said assets having an associated life cycle with a plurality of phases, a system for managing each of said one or more assets in each of said one or more facilities. The system comprises:
means associated with each of said one or more facilities for recording data from each of said one or more assets in said one or more facilities during said assets operation in one or more of said plurality of associated life cycle phases and information about each of said one or more assets in a server associated with said one of said one or more facilities in which said one or more asset is located;
means for transferring said recorded data and information from each of said servers associated with one of said one or more facilities to an enterprise level server; and
means for allowing said recorded data and information to be available for viewing either at said local server or said enterprise level server in a form that provides information to a user of said one or more assets about said asset and one or more of said plurality of life cycle phases associated with each of said one or more assets.

### Description of the Drawing

Fig. 1 shows a block diagram of an enterprise in which the present invention can be used.
Fig. 2 shows a layout in schematic form for each of the local servers shown in Fig. 1.
Fig. 3 shows a screenshot of the window that can be viewed by a user of the present invention known as "Asset Supervision: Current State."
Fig. 4 shows a screenshot of the window that can be viewed by a user of the present invention known as "Asset Supervision: Recent Failure Mode."
Fig. 5 shows a screenshot of the window that can be viewed by a user of the present invention known as "Asset Identification."
Fig. 6 shows a screenshot of the window that can be viewed by a user of the present invention known as Direct Access to Documentation for the Asset."
Fig. 7 shows a screenshot of the window that can be viewed by a user of the present invention known as "Analysis of Equipment Effectiveness."
Fig. 8 shows a screenshot of the window that can be viewed by a user of the present invention known as "Analysis of Equipment Failure Reasons."
Fig. 9 shows a screenshot of the window that can be viewed by a user of the present invention known as "Equipment Productivity Overview."
Fig. 10 shows a screenshot of the window that can be viewed by a user of the present invention known as "Analysis of Equipment Scheduling and Usage."
Fig. 11 shows a screenshot of the window that can be viewed by a user of the present invention known as "Backup Management for Controller Programs."
Fig. 12 shows a screenshot of the window that can be viewed by a user of the present invention known as "Real-Time Asset Monitoring."
Fig. 13 shows a screenshot of the window that can be viewed by a user of the present invention known as "Asset Condition Report."
Fig. 13a is a flowchart relating to the predictive maintenance function of the asset condition report and Figs. 13b and 13c are screenshots for that function.
Fig. 13d is a flowchart relating to the preventative maintenance function of the asset condition report.
Fig. 14 shows a screenshot of the window that can be viewed by a user of the present invention known as "Pending Fault Reports."
Fig. 15 shows a screenshot of the window that can be viewed by a user of the present invention known as "Fault Report Submission."
Fig. 16 shows a screenshot of the window that can be viewed by a user of the present invention known as "Fault Report Review."
Fig. 17 shows a screenshot of the window that can be viewed by a user of the present invention known as "Spare Parts Availability Management."
Figs. 18a, 18b and 18c each show a screenshot of one example of the window that can be viewed by a user of the present invention known as "Scheduled Reports."
Figs. 19a, and 19b each show a screenshot of one example of the window that can be viewed by a user of the present invention known as "Ad-Hoc Reports."
Fig. 20a is a flowchart relating to the benchmarking feature of the present invention and Figs. 20b to 20d show screenshots for a benchmarking study of several assets used by an enterprise in more than one plant.
Fig. 21a is a flowchart relating to the re-commissioning feature of the present invention and Figs. 21b to 21f show screenshots for the survey of the life of an to be re-commissioned.
Fig. 22 is a flowchart relating to the reports on machine states where the enterprise level server is hosted by the asset supplier.
Fig. 23 is a flowchart relating to the recommendations on the usage of an asset where the enterprise level server is hosted by the asset supplier.
Figs. 24a and 24b are screenshots of a web page known as the "Asset Condition Tree" which is available on the enterprise level server.

### Description of the Preferred Embodiment(s)

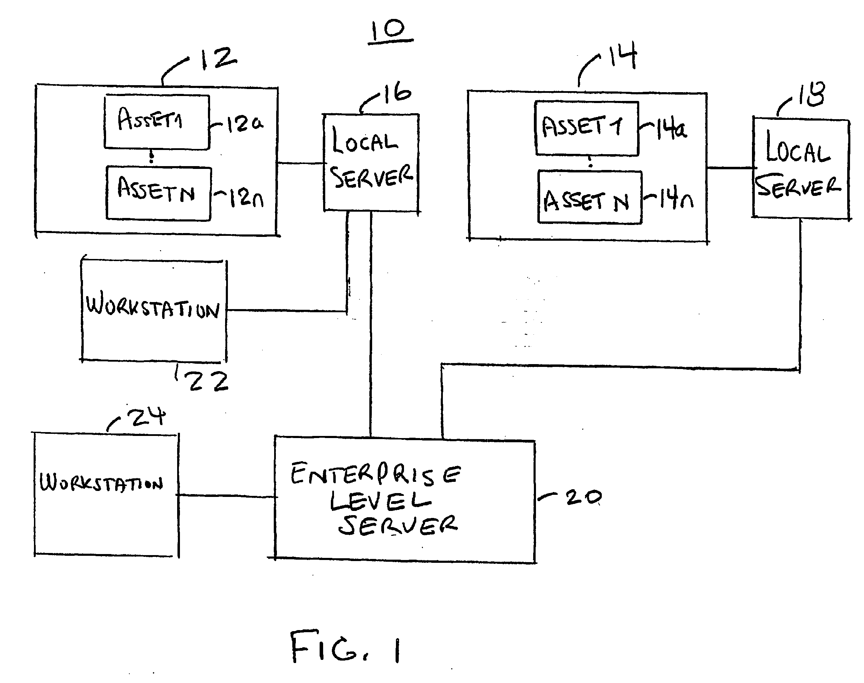

Referring now to Fig. 1, there is shown a block diagram of an enterprise 10 which can benefit from the use of the present invention. Enterprise 10 includes one or more facilities. Two such facilities 12 and 14 are shown in Fig. 1 only as an example and not as a limitation on the scope of the present invention.

Each of the facilities 12 and 14 includes one or more assets 12a to 12n for facility 12 and 14a to 14n for facility 14. An asset as that term is used herein is an apparatus that performs work and thus has value to an enterprise. Therefore the enterprise would like to keep its assets in good working order. If enterprise 10 is a manufacturer of automobiles, then facilities 12 and 14 may manufacture various parts used in the assembly of new automobiles and as after market parts for repair, reconstruction, refurbishment etc. of previously sold automobiles and assets 12a to 12n and 14a to 14n may, for example, be the industrial robots, stamps, presses, and other machines used in the production of those parts.

There is associated with each facility 12 and 14 a local server. As is shown in Fig. 1, local server 16 is associated with facility 12 and local server 18 is associated with facility 14. Real time data is transferred from the assets 12a to 12n and 14a to 14n to local servers 16 and 18, respectively. While local servers 16 and 18 are each shown in Fig. 1 as a single block it is well known in the art that each server can be deployed on one or more computers depending on the facility architecture, server capacity, resources, pre-existing installations of parts of the server's functionality etc.

Also associated with enterprise 10 is an enterprise level server 20 which may, as is shown in Fig. 1, be located at another facility such as a corporate headquarters of the enterprise 10. Typically aggregated/condensed data is transferred from local servers 16 and 18 to enterprise level server 20. It should be appreciated that enterprise level server 20 may also be located at facility 12 or facility 14 or it may be located at the site of the manufacturer of the assets used by the enterprise 10, or even at the location of a third company providing maintenance management functions to the owner of the assets. Thus the term "enterprise level server" as used herein means depending on the context of its use a server hosted by the manufacturer, that is, the supplier of the asset to the enterprise or a server located at an enterprise facility or at a facility external to the enterprise but not hosted by the asset supplier. It is not the location of enterprise level server 20 that is important but the function performed by server 20 in accordance with the present invention.

Also shown in Fig. 1 are workstation 22 associated with local server 16 and workstation 24 associated with enterprise level server 20. A workstation is not shown in Fig. 1 in association with local server 18 solely for ease of illustration. The workstations 22 and 24 allow some or all of the data contained in each server with which the workstation is associated and in other servers in the enterprise 10 to be viewed depending on the level of access given to the user of the workstation. Thus a user of workstation 22 or workstation 24 may, depending on his or her level of access, be able to view the data in local server 16 for the assets in facility 12 and also in local server 18 for the assets in facility 14 and in enterprise level server 20 for the entirety of enterprise 10.

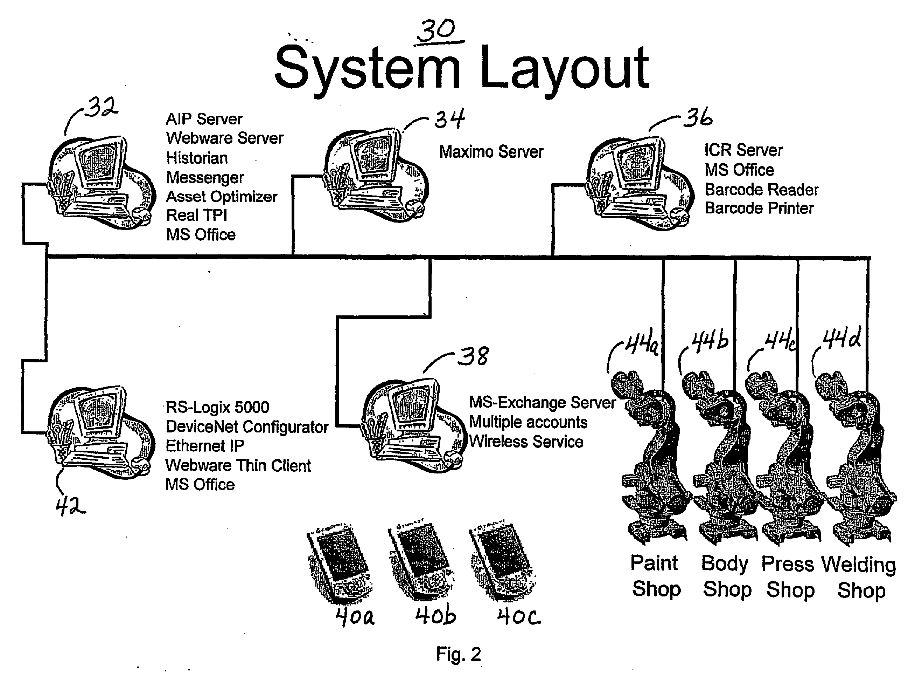

Referring now to Fig. 2, there is shown a layout 30 in schematic form of the function provided by each of the local servers 16 and 18. Each of local servers 16 and 18, which may as is described above be deployed on one or more computers (servers), provide the following functions:
Servers 32 and 34 - these servers provide asset management with server 32 performing functions such as data storage with a historian, asset monitoring and report generation, and server 34 functioning as a computerized maintenance management system (CMMS) one example of which is the Maximo CMMS software available as of the filing date of the U.S. patent application from MRO Software of Bedford, MA;
Server 36 provides spare parts management and with a barcode reader and printer production counting; and
Server 38 provides communication with mobile devices such as pagers and PDAs 40a to 40c.

Layout 30 also shows a viewing workstation 42 and four assets in the form of industrial robots 44a to 44d. Robot 44a is located in the paint shop, robot 44b is located in the body shop, robot 44c is located in the press shop and robot 44d is located in the welding shop. While only one robot is shown for robots 44a to 44d it should be appreciated that each of the shops may have many robots and other types of assets.

In accordance with the present invention all aspects from all of the life cycle phases of an asset, which in the embodiment described herein are, without limitation, industrial robots but can be any asset, can be viewed from one place. These aspects include but are not limited to asset documentation, status reporting, management, maintenance management including monitoring for both predictive and preventative maintenance, alarms, events and notification, and reporting on the effectiveness and productivity.

The life cycle of an asset consists of the following phases:
Specification - specifying an asset to be used for a particular purpose in a facility;
Acquisition - acquiring the specified asset;
Application - installing and commissioning the asset for the particular use;
Operation - operating the asset and maintaining and repairing the asset while in operation; and
Re-commissioning - using the asset again for a different purpose or product.

Since the computer system containing all the information about the assets is subject to the same specification and acquisition process as the assets themselves, the information may be entered into the computer system no earlier than the application phase. Nonetheless, information from the preceding specification and acquisition phases can be made available and put to good use in the system, e.g. blueprints in the form of documentation aspects or identifying data such as manufacturer part number in the asset identification aspects, as is described in more detail below.

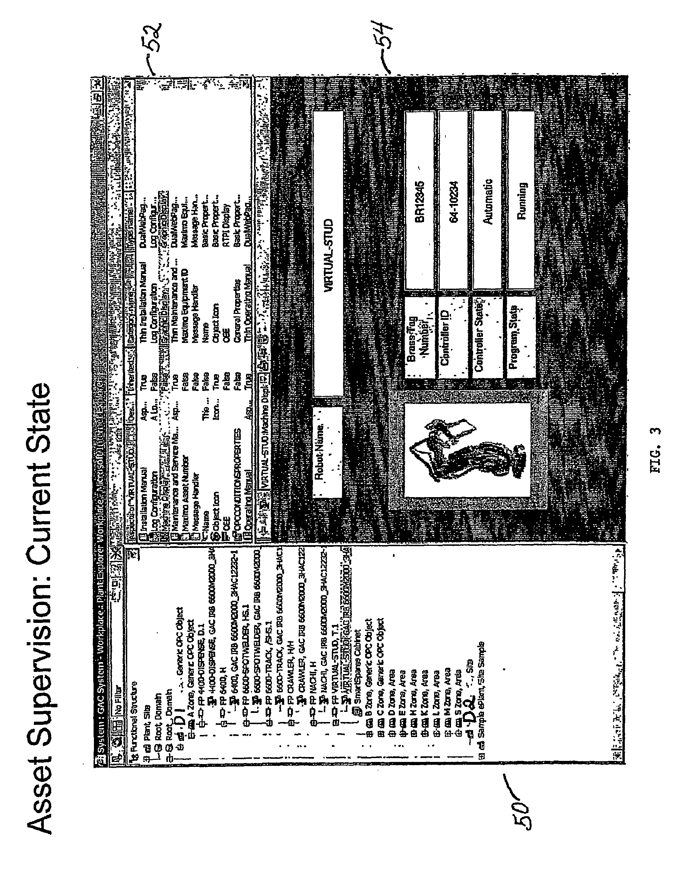

The present invention includes a computer program which, when executed, presents the user with one or more windows that each provide information either about a single phase for the asset or one or more or phases. Most of the windows are, as is shown in Fig. 3, divided into three parts and with reference to that figure include:
a. an asset tree 50 on the left side which helps the user locate assets by a user selected criteria which for example can be the location, that is, the facility where the asset is located and its spatial hierarchical relationship to other assets in that facility, or the function performed by the asset in a functional hierarchical relationship to other assets;
b. an aspect list 52 at the top right - selecting an asset in the asset tree 50 displays its aspects (items for which information is available) in the aspect list 52; and
c. an aspect view 54 at the lower right - selecting an aspect in the aspect list displays the view for the selected aspect in the aspect view 54.

Fig. 3 shows the view for use in the operation and re-commissioning lifecycle phases, known as "Asset Supervision: Current State". This window provides the view that gives the user of the present invention a fast overview of the current status of the asset selected by the user in asset tree 50. As is shown in the figure, the user has selected in the asset tree 50 the asset identified by the name "Virtual-Stud." In the aspect view 54 the user can see the tag number, controller ID, controller state and the program state of that asset. While the asset tree 50 is a central point of navigation, the aspect view 54 for the selected asset also serves as another central point of navigation.

As is shown in the asset tree 50 of Fig. 3, instead of the user selecting a particular asset the user could first select an object from the asset tree 50 representing the entire facility or plant in which the asset is located or an object from the asset tree 50 representing the production line in which the asset is used, and then select the Asset Supervision view of that object. In that case, the aspect view 54 will give an overview of either the facility or the selected production line.

While not shown in Fig. 3, the overview of the production line or facility shows all of the assets in that production line or facility in the form of icons. Right-clicking into this aspect view, but not on an icon, opens a menu with all available views for the production line or facility, and the user can select from the views the one the user is interested in viewing next. This next view will open in a new window.

By left-clicking on the icon for an asset shown in the above overview of the production line or facility a window will open showing only the Asset Supervision view of that asset. All other views available for the object under consideration, this time the asset, are accessible from this aspect view. Right-clicking into this aspect view opens a menu with all available views for the asset, and the user can select from the views the one the user is interested in viewing next. This next view will open in a new window.

Alternatively, right-clicking on the icon for an asset shown in the above overview of the production line or facility opens another menu with all available views for the asset, and the user can select from the views the one the user is interested in viewing next. This next view will open in a new window.

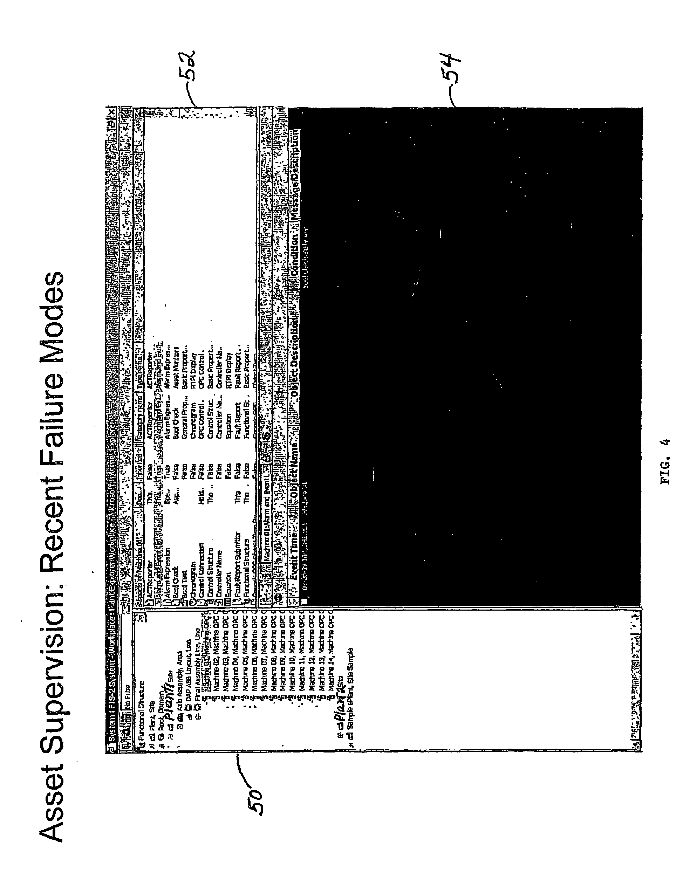

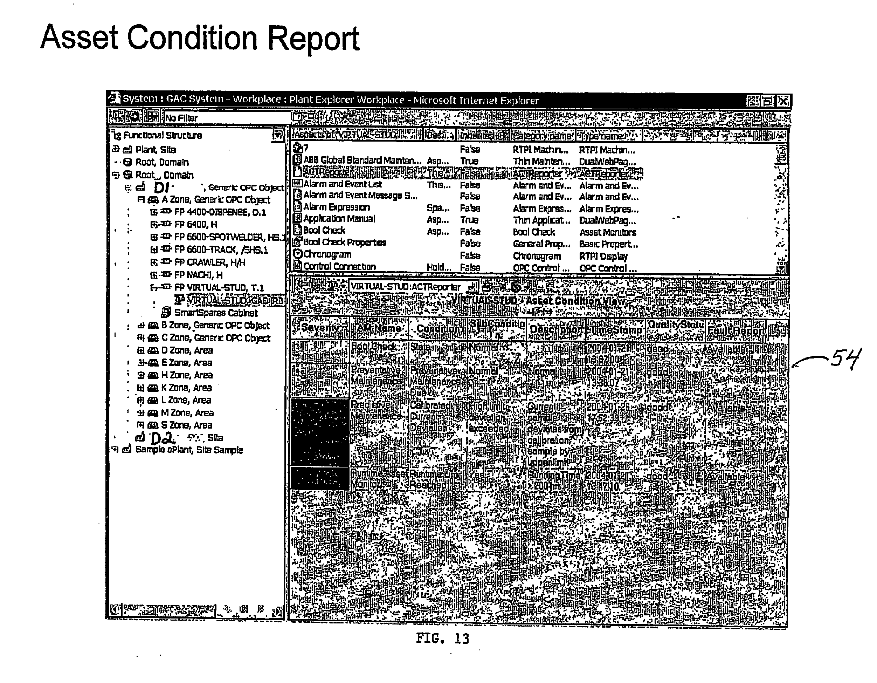

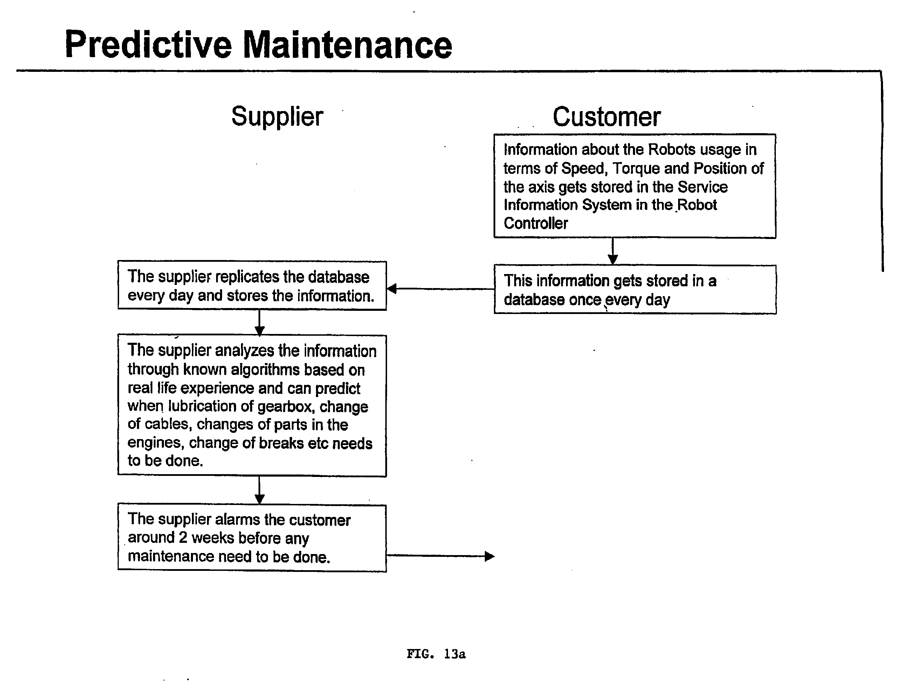

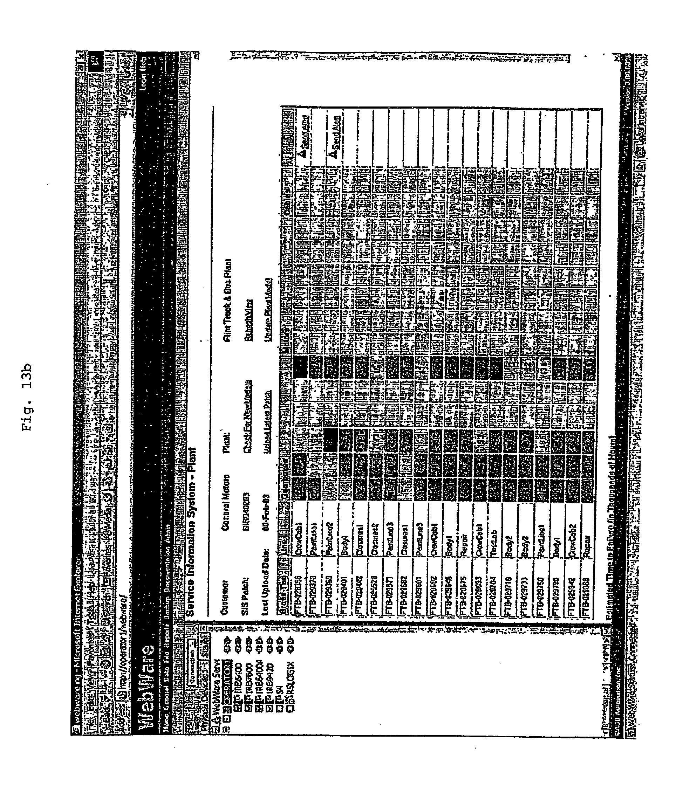

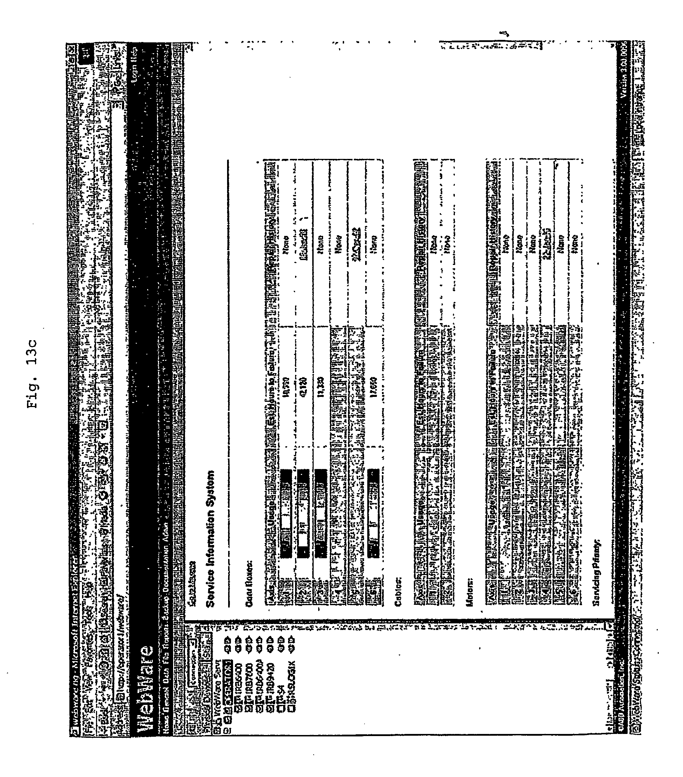

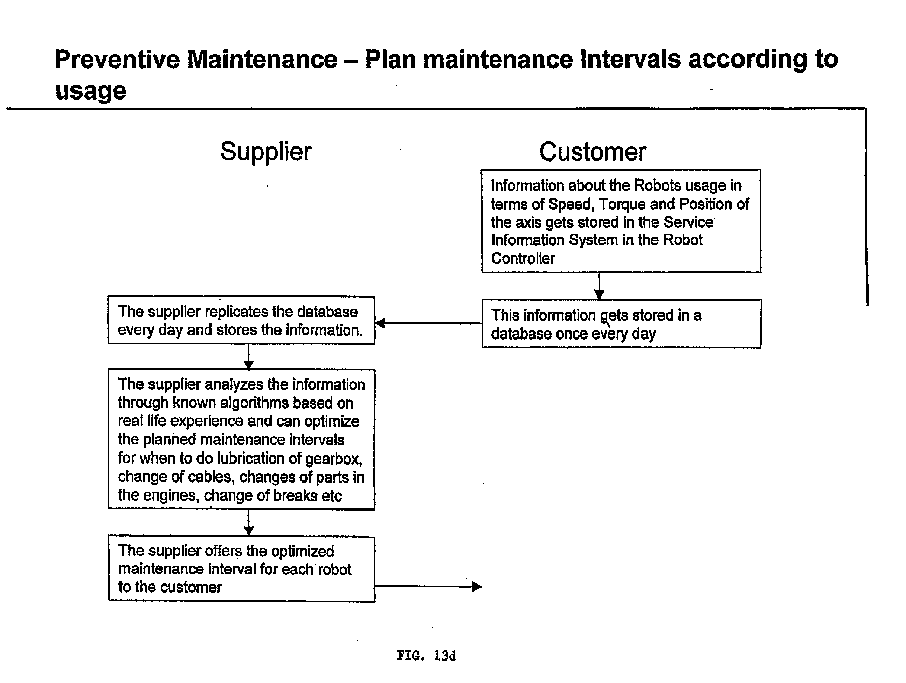

Referring now to Fig. 4, there is shown the view for use in the operation lifecycle phase, known as "Asset Supervision: Recent Failure Mode." The view provided by this window in the aspect view 54 is a standard alarm and event list known from operator graphics selected in the aspect list 52 for the asset known as "Machine 01" selected in the asset tree 50. The aspect view 54 shows in the column headed "Event Time" the date and time of the event, in the column "Object Name" the name of the asset, that is, "Machine 01" and in the column headed "Condition" the information "Bool Check, State Alarm." If the asset is in an error mode, the user can obtain more detailed information on the error in the Asset Condition Report view shown in Fig. 13 and described below.

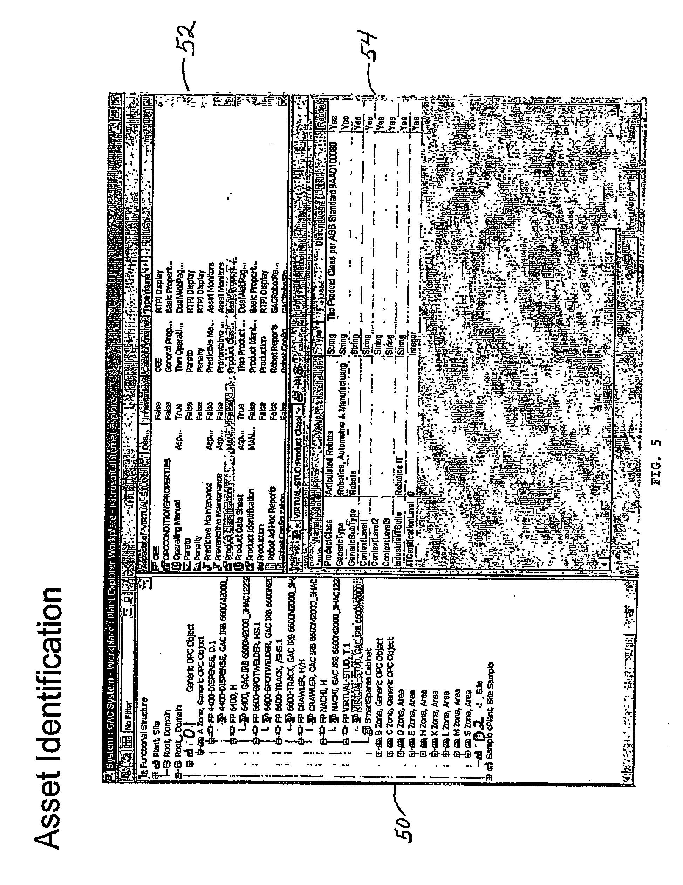

Referring now to Fig. 5, there is shown the view for use in the application, operation and recommissioning lifecycle phases, known as "Asset Identification." This aspect allows the centralized storage of all types of information identifying or describing the asset in any meaningful way. This information includes names, serial numbers, type descriptors, product codes, version numbers, and many other kinds of identifying and describing information for the selected asset.

For example, the user has in Fig. 5 selected "Product Classification" in aspect list 52 for the asset identified in the asset tree 50 as "VIRTUAL-STUD" and the aspect view 54 shows the Product Class, Generic Type and SubType along with other Product Classification information for that asset.

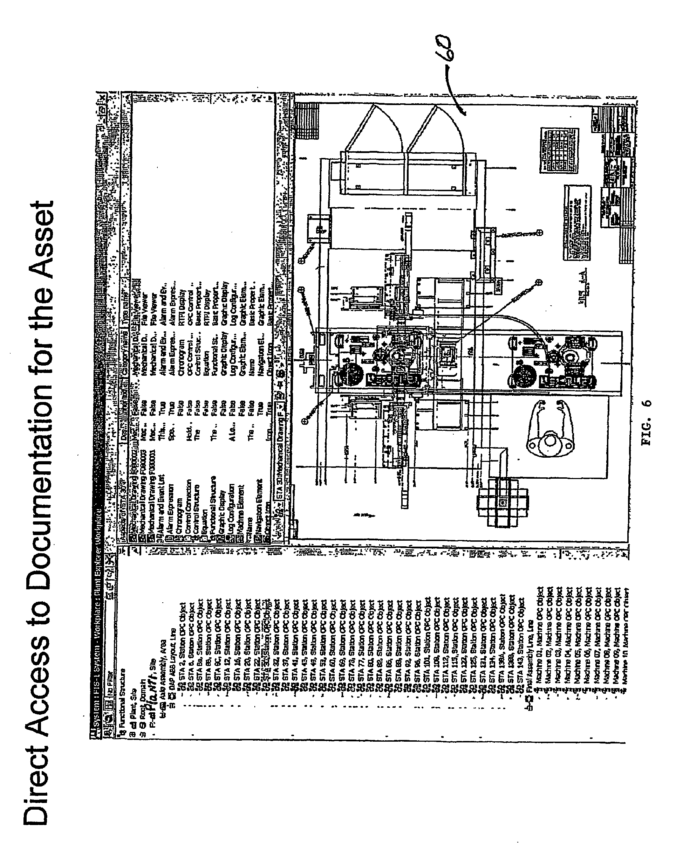

Referring now to Fig. 6, there is shown the view for use in the application, operation and recommissioning lifecycle phases, known as "Direct Access to Documentation for the Asset." All kinds of electronic documents can be incorporated as aspects of the asset and displayed in this window independent of their formats. These documents include operator manuals, installation instructions, construction blueprints, wiring plans; certification documents, training videos, and many others. The user selects the particular document to view in the aspect view from the aspect list and has, as is shown in Fig. 6, selected to view in the aspect view of this window the blueprint 60 known as "Mechanical Drawing F080002 for the asset known as "STA 30" in the "Axle Assembly, Area" of a certain automotive manufacturing facility.

The user of the asset might not have the knowledge of the causes of productivity losses. The present invention allows for the tracking of the machine states, that is, the states of the asset. The information about the different machine states will help the user in its analysis of productivity and can be offered to the user of the asset either in the embodiment of the present invention where the server is hosted by the asset supplier or in the embodiment where the server is located at an enterprise facility or at a facility external to the enterprise but not hosted by the asset supplier.

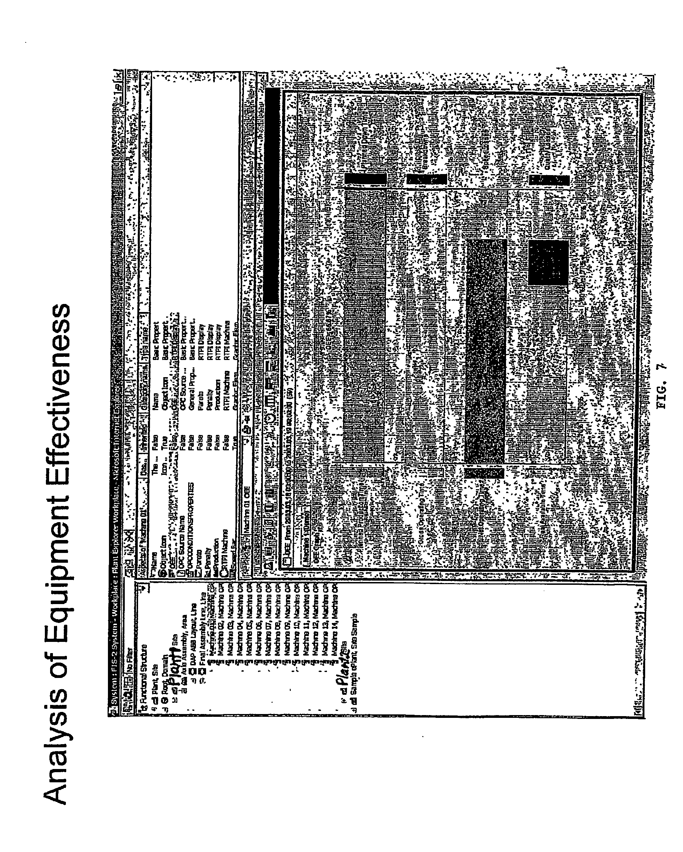

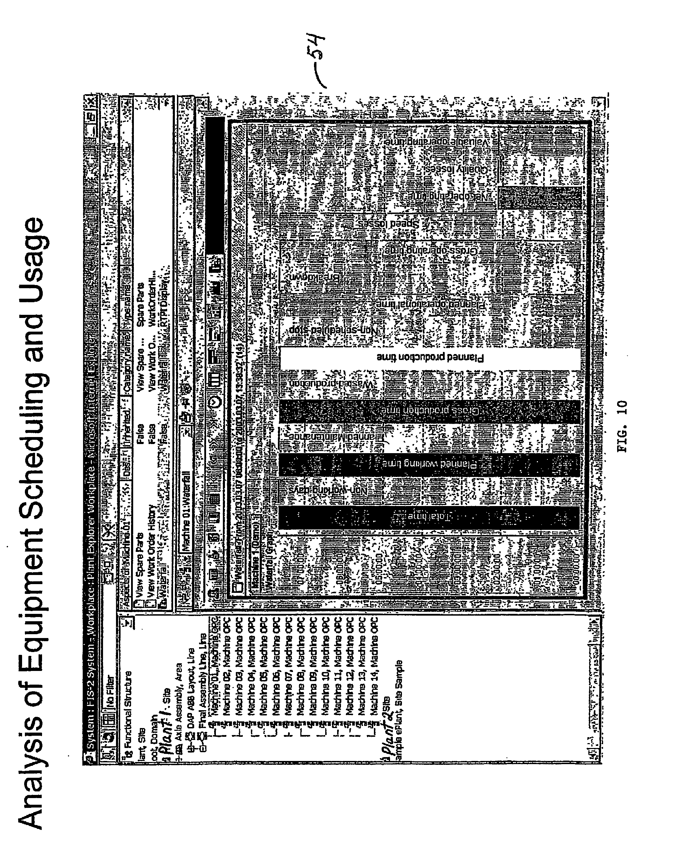

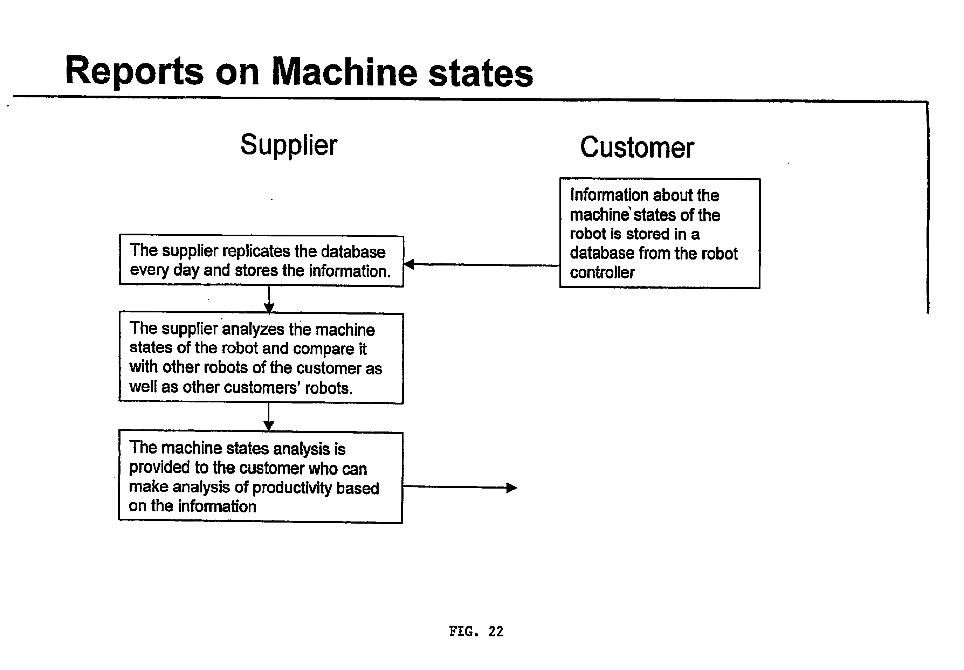

Figs. 7 and 10 described below show specific examples of the machine states information available to the user of the asset. Fig. 22 shows in the form of a flowchart the reports on machine states where the server is hosted by the asset supplier.

Referring now to Fig. 7, there is shown the view for use in the operation and recommissioning lifecycle phases, known as "Analysis of Equipment Effectiveness." The aspect view in this window shows the industry-wide accepted *Overall Equipment Efficiency* KPI (key process indicator), calculated from the history of the state of the asset. In the example shown in this figure the user has selected in aspect tree 50 the asset known as "Machine 01" and for that asset has selected in aspect list 52 the aspect known as overall equipment efficiency (OEE).

Fig. 7 shows that in a 24 hour period the asset "Machine 01" had an OEE of 65%. One example of a product that performs the OEE calculation is the Optimize IT Real-Time Production Intelligence software available as of the filing date of this patent application from the assignee of the present invention.

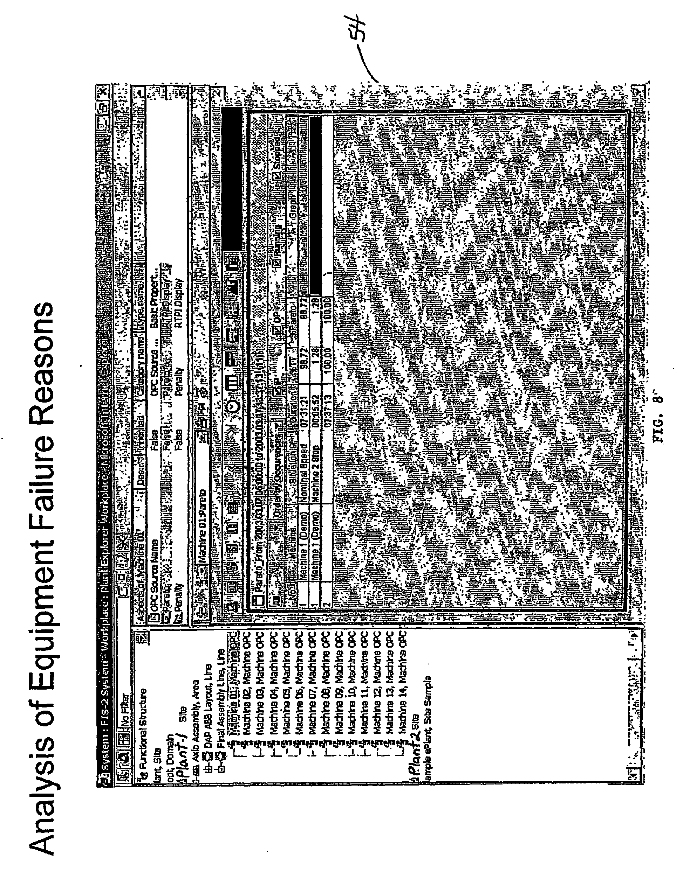

Referring now to Fig. 8, there is shown the view for use in the operation and recommissioning lifecycle phases, known as "Analysis of Equipment Failure Reasons."

As can be seen from Fig. 8 the aspect view 54 in this window shows the relative amount of time the selected asset, which in this example is "Machine 1", has spent in different states. This information helps the user identify the most prevalent and most costly failure modes and reasons and directs the user towards a most efficient way of improving the production process. The information shown in the aspect view of this window is available from the Optimize IT Real-Time Production Intelligence software.

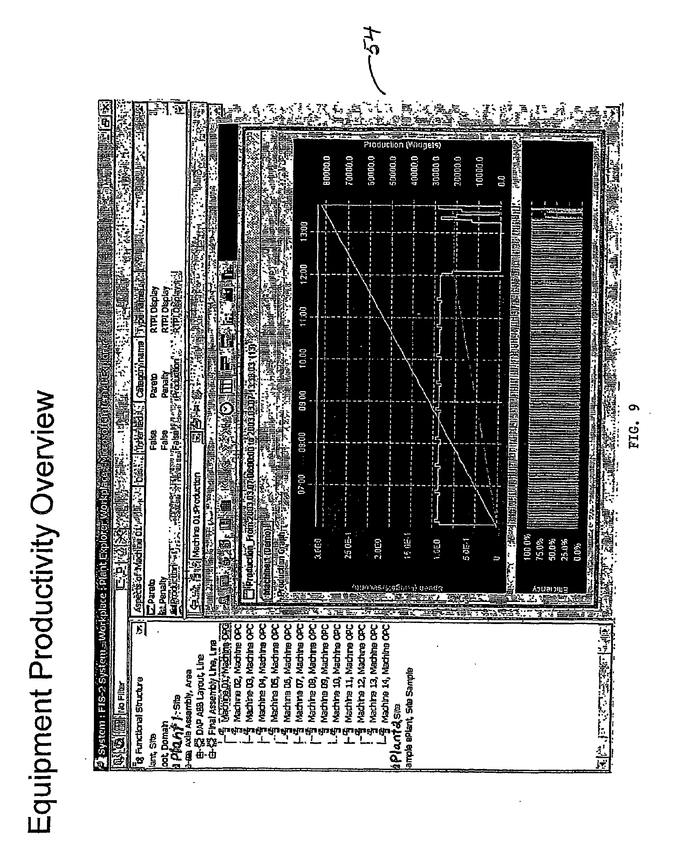

Referring now to Fig. 9, there is shown the view for use in the operation and recommissioning lifecycle phases, known as "Equipment Productivity Overview." As can be seen from Fig. 9 the aspect view 54 of this window shows the status of the selected asset, which is in this example is also "Machine 1", and its effect on the production speed and actual production compared to the planned production. The information shown in the aspect view 54 of this window is available from the Optimize IT Real-Time Production Intelligence software.

Referring now to Fig. 10, there is shown the view for use in the operation and recommissioning lifecycle phases, known as "Analysis of Equipment Scheduling and Usage." The aspect view 54 in this window shows the relative amount of time the selected asset, which is in this example also "Machine 1", has spent in different states. The states are categorized into the different tasks that are known to influence the time the asset is available for production. The information shown in the aspect view 54 of this window is available from the Optimize IT Real-Time Production Intelligence software.

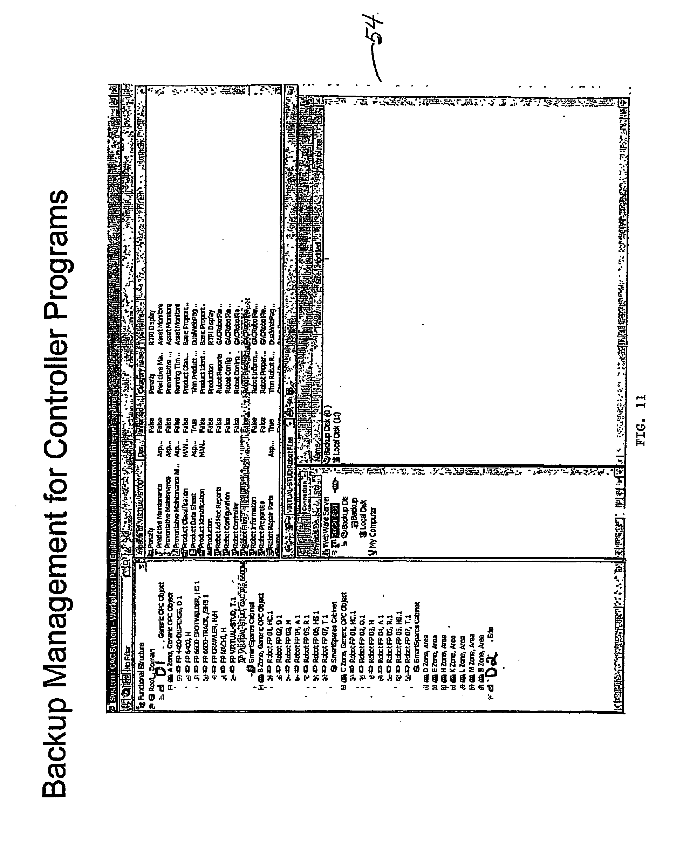

Referring now to Fig. 11, there is shown the view for use in the application, operation and recommissioning lifecycle phases, known as "Backup Management for Controller Programs." The aspect view 54 in this window helps the user keep track of different versions of the programs running in the controller for the asset. This is very important to users, because undocumented changes of the programs easily lead to confusion. One example of a product that provides that information as to the different versions of the programs running in the asset controller is the WebWare software available as of the filing date of this patent application from the assignee of the present invention.

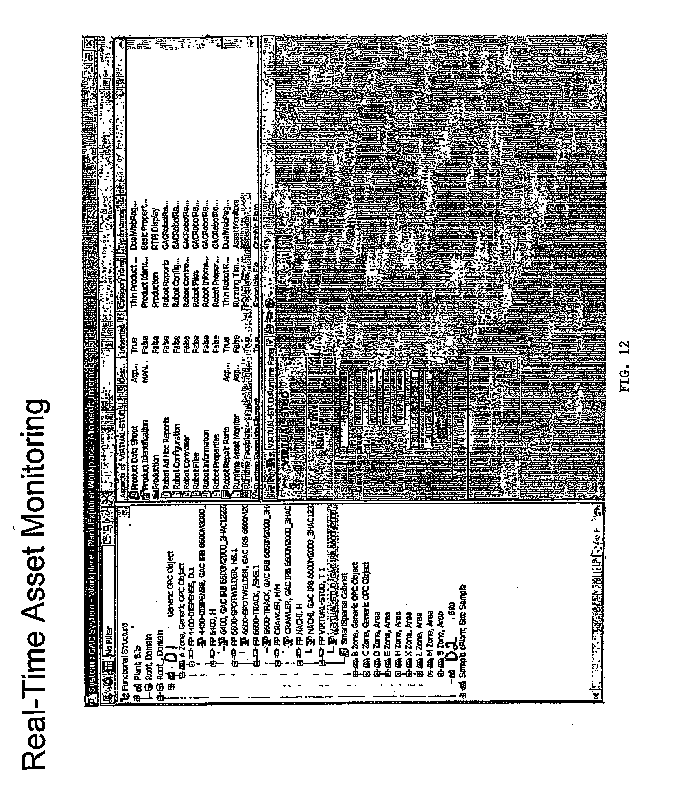

Referring now to Fig. 12, there is shown the view for use in the operation lifecycle phase, known as "Real-Time Asset Monitoring." An asset monitor is a software module that monitors an asset and sends a notification to a user upon the occurrence of an event that affects the asset. These events may, for example, be:
a. the asset exceeding a predetermined amount of working time which suggests that the asset should undergo maintenance; or
b. detecting mechanical deterioration of the asset by the use of a vibration analysis.

The asset monitor to be used with an asset is dependent on the type of asset to be monitored. The Optimize IT Asset Optimizer software available as of the filing date of this patent application from the assignee of the present invention is one example of a product that provides generalized asset monitors that can be configured for different usage scenarios.

Referring now to Fig. 13, there is shown the view for use in the operation lifecycle phase, known as "Asset Condition Report." The aspect view 54 in this window displays to the user the output of all asset monitors that monitor an asset which in this aspect view is the asset known as "Virtual-Stud." If the asset is in a failure mode, the user can obtain detailed information, for example, failure reason and suggested remedial action, on the error in this view by right-clicking on a condition and selecting "Condition details" from the context menu.

The aspect view 54 of this figure shows in the column headed "AM Name" the asset monitors named "Preventative Maintenance" and "Predictive Maintenance." The column headed "Condition" has in it for the Preventative Maintenance AM that the asset known as "Virtual-Stud" has "Preventative Maintenance Due" and for the Predictive Maintenance AM that the "Virtual-Stud" asset has a "Calibrated Current Deviation." The column headed "Subcondition" provides further information about each Condition and the column headed "Description" provides a description of each Condition and Subcondition. The column headed "Fault Report" tells the user that such a report is available for the Predictive Maintenance asset monitor for the asset known as "Virtual-Stud."

The Predictive Maintenance function of the present invention is shown in more detail in the flowchart of Fig. 13a and in the screenshots of Figs. 13b and 13c. The Preventative Maintenance function of the present invention is shown in more detail in the flowchart of Fig. 13d. The flowcharts of Figs. 13a and 13d are both for that embodiment of the present invention wherein the server is hosted by the asset manufacturer, that is, the supplier of the asset to the user enterprise.

As is shown in the flowchart of Fig. 13a, the supplier analyzes the information about the assets, which in this example are industrial robots, using known algorithms. The supplier sends the user enterprise (identified as "Customer" in Fig. 13a) an alarm about the need to perform any maintenance several weeks before the date that the maintenance has to be performed. As is shown in the flowchart of Fig. 13d, the supplier analyzes the information about the assets using known algorithms and offers to the Customer, that is the enterprise using the asset, the optimized maintenance interval for each asset. It should be appreciated that while the flowcharts of Figs. 13a and 13d are for that embodiment of the present invention where the server is hosted by the supplier that the algorithms could be in the assets or any of the servers shown in Fig. 1.

The screenshot of Fig. 13b shows an example of how the supplier personnel would see the time to maintenance for the assets located at the plant, that is the enterprise facility, identified in that figure. In the embodiment described herein, the assets are industrial robots and the boxes under the column heading "Gearboxes" show the time to maintenance for the gearboxes for an axis of each of the robots identified in the column headed "Brass Tag."

The boxes in four of the columns under the "Gearboxes" heading each have in them a number that is the remaining time to the next lubrication of the gearbox, that is oil change, for that axis of the robot. The number in each box is a score determined by a previously existing algorithm. The algorithm uses measured torque, distribution/position of the axis and velocity (speed) to calculate the estimated time to the next oil change.

The shading in each box that has a number in it tells the user how long the estimated time is to the next oil change. Light shading indicates "okay" which means that there is a lot of time left before the next oil change. No shading indicates that the time remaining to the next lubrication is in between okay and the time is getting close to the change the oil in the gearbox. When the number determined by the algorithm falls below a predetermined number that indicates that there is only 2000 hours left to the next oil change the associated box is given a dark shading and a message is sent to the asset user about two weeks in advance of the oil change due date.

Fig. 13c, is a screen shot, showing an example of how the present invention shows oil change in the gear boxes of one specific robot. The information is still based on measured torque, distribution/position of the axis and velocity (speed) used in the algorithm described in connection with Fig. 13b. The difference between the present invention and the prior art is that this invention can as is shown in Fig. 13c display to the enterprise the information of usage, estimated hours to failure etc.

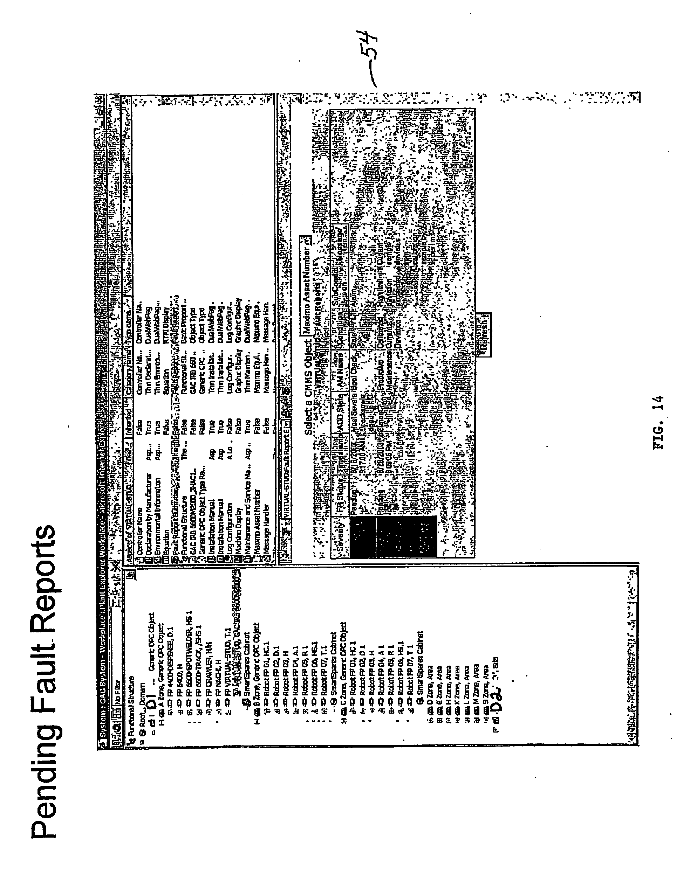

Referring now to Fig. 14, there is shown the view for use in the operation lifecycle phase, known as "Pending Fault Reports." The aspect view 54 in this window displays to the user pending fault reports that are produced by the asset monitors. For example, the aspect window 54 in this figure shows two pending fault reports for the asset known as "Virtual-Stud." The Optimize IT Asset Optimizer software is one example of a software product that can produce the pending fault reports.

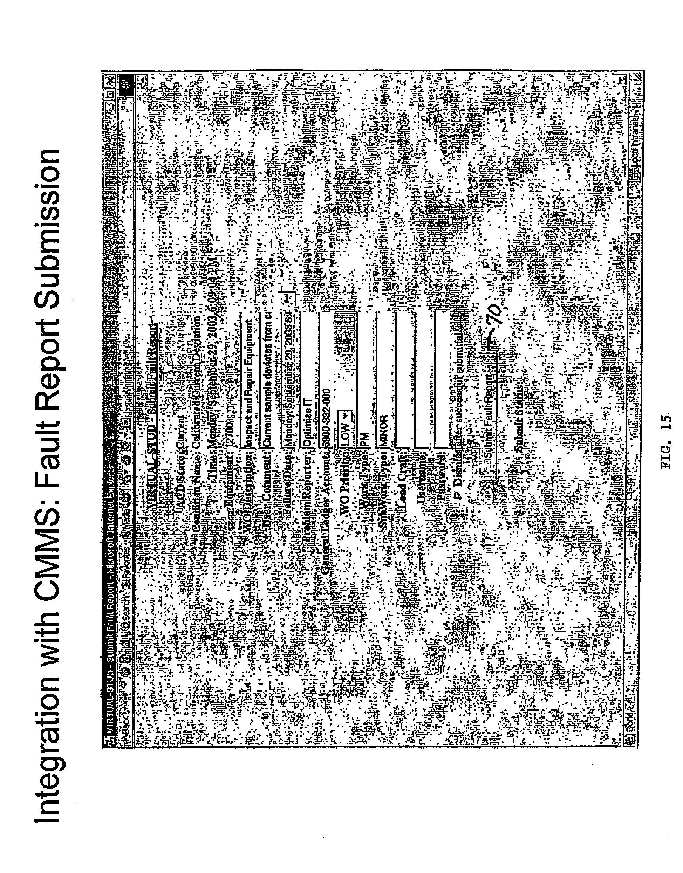

Referring now to Fig. 15, there is shown the view for use in the operation lifecycle phase, known as "Fault Report Submission." This window is available to a user by right-clicking on a fault report and selecting "Submit" from the menu. In the example shown in Fig. 15, the user has right-clicked on the second fault report shown in Fig. 14 for the asset known as "Virtual-Stud" in order to produce the fault report shown in this figure. The user may or may not have to fill in information in the form shown in this figure if that information did not come from the prior figure. Once the form is filled out the user then clicks the "Submit Fault Report" button 70 to submit the report to a computerized maintenance management system (CMMS). Since the submitted report includes what to do in response to the fault it is a work order. As is well known to those in the art, CMMSs are available from many vendors. The Optimize IT Asset Optimizer software is one example of a software product that can produce work orders and send it to a CMMS.

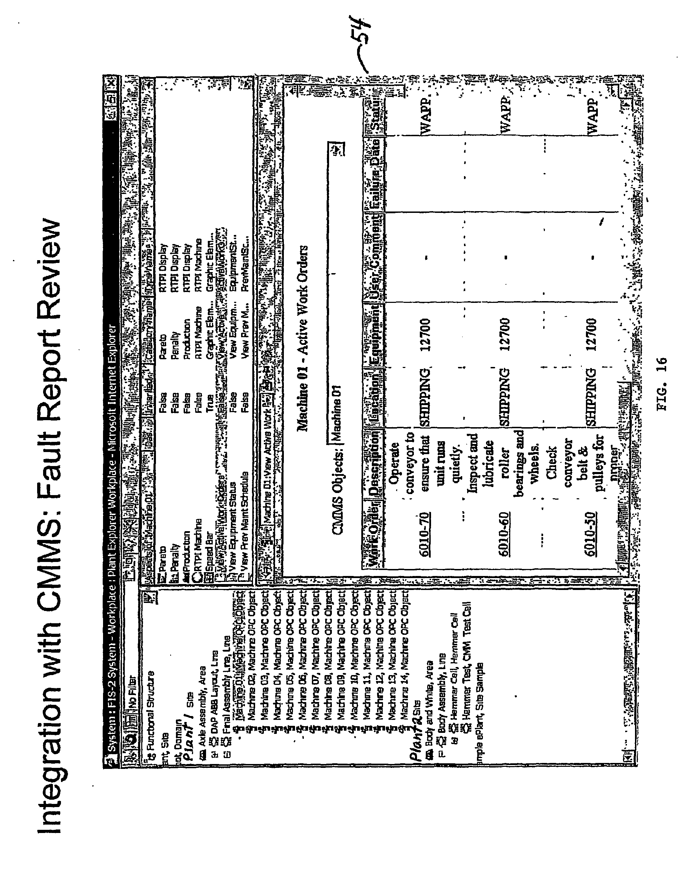

Referring now to Fig. 16, there is shown the view for use in the operation and recommissioning lifecycle phases, known as "Fault Report Review." The aspect view 54 shown in this window is one of several views that retrieve data from the CMMS and let the user review the submitted work orders for the selected asset, which in this example is the asset known as "Machine 01", and other data on the asset stored in the CMMS. The Optimize IT Asset Optimizer software is one example of a software product that can produce these views.

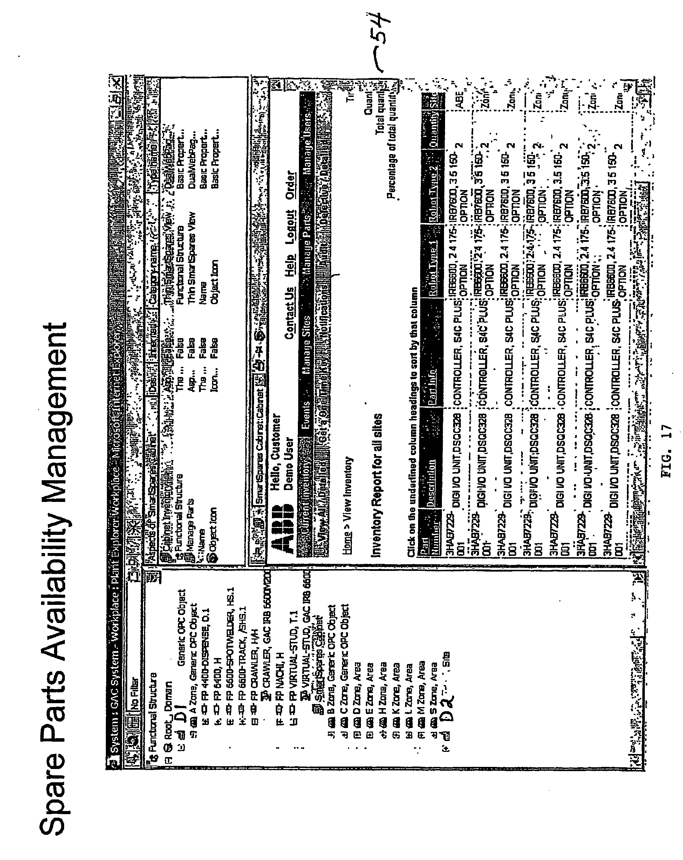

Referring now to Fig. 17, there is shown the view for use in the operation and recommissioning lifecycle phases, known as "Spare Parts Availability Management." The aspect view 54 in this window shows the spare parts that are available on the shop floor of the facility in which the asset is used. The SmartSpares cabinet available as of the filing date of this patent application from the assignee of the present invention is one example of a product that has this spare parts availability information.

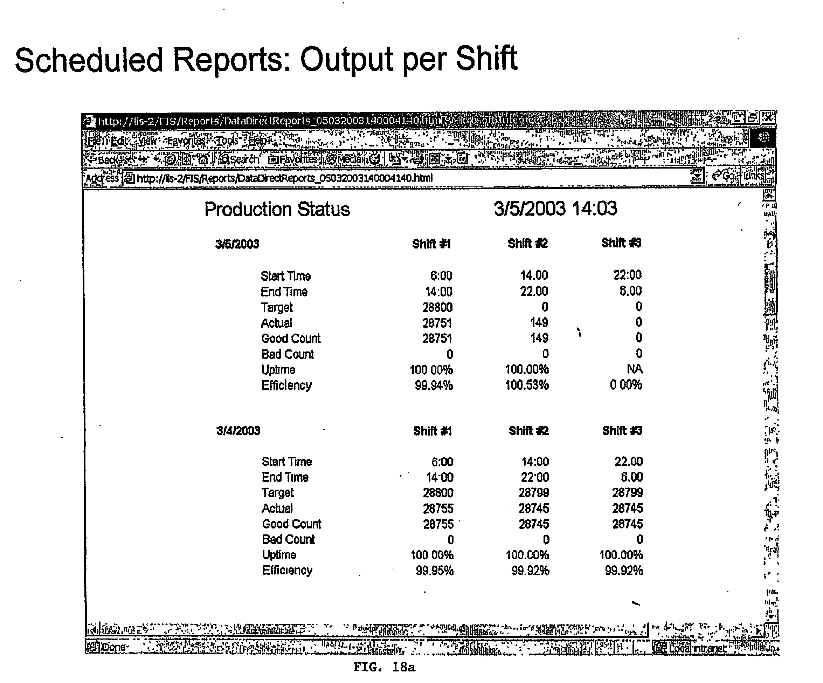

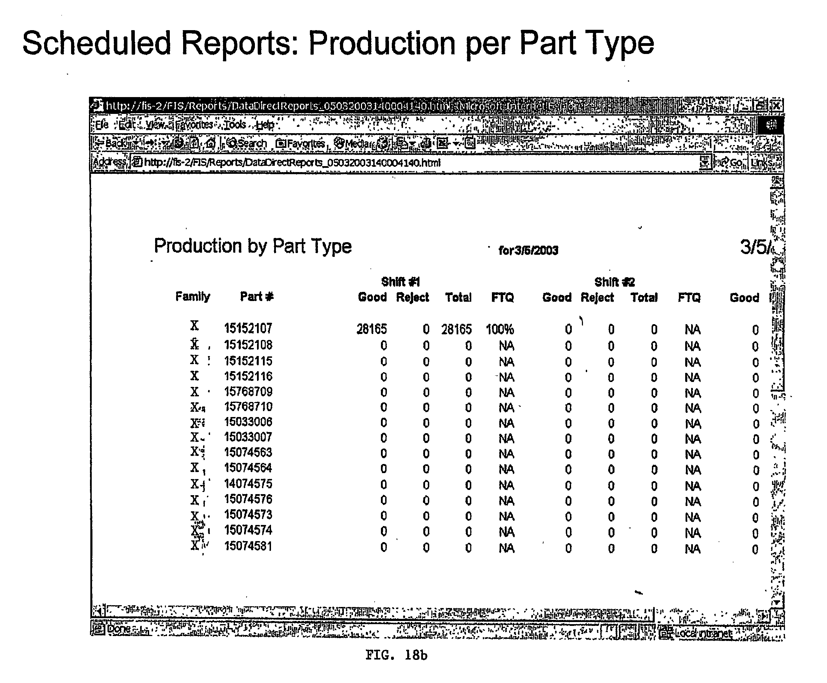

Referring now to Figs. 18a, 18b and 18c, there are shown three examples of the view for use in the operation lifecycle phase, known as "Scheduled Reports." Fig. 18a shows an output per shift report for two days, Fig. 18b shows the production by part type for a particular day and the shifts during that day, and Fig. 18c shows the production by asset for a particular day and the three shifts during that day.

Reports such as those shown in Figs. 18a, 18b and 18c can be scheduled and run automatically or on demand. They are highly flexible and can provide detailed or summarized data. It is possible to compare shifts, product types, machine types, and other categories in terms of absolute output values as well as relative performance. The Inform IT Information Manager software available as of the filing date of this patent application from the assignee of the present invention is one example of a product that has this reporting capability.

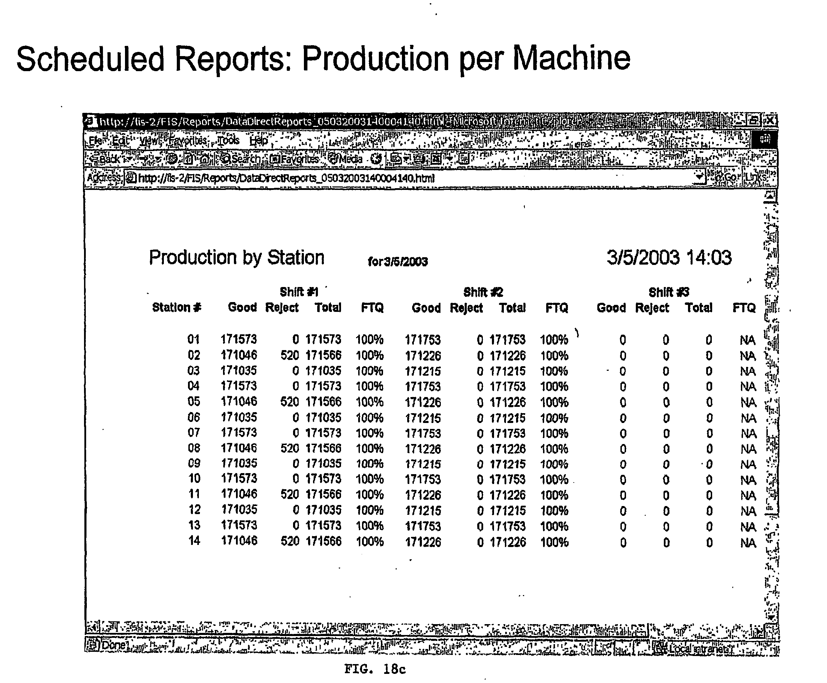

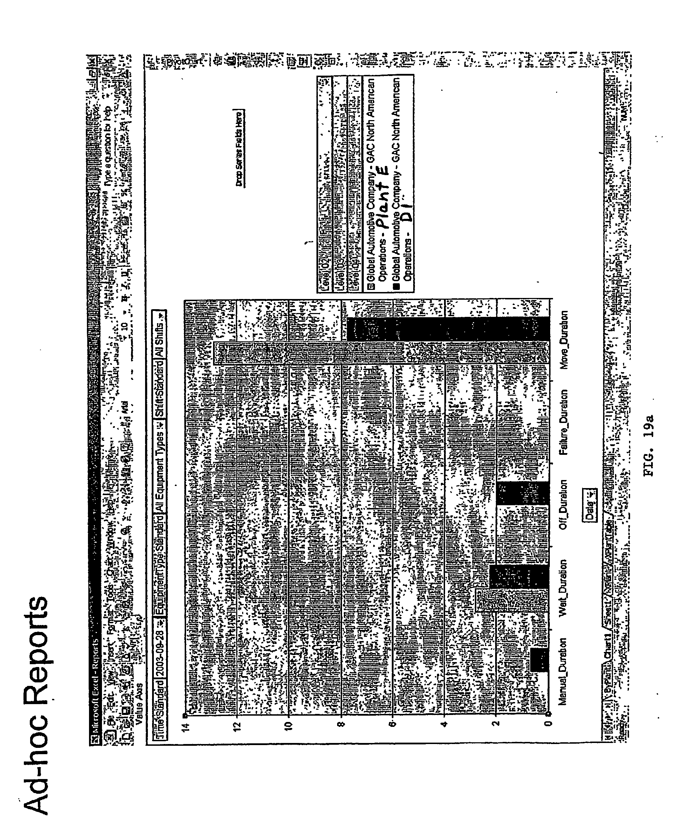

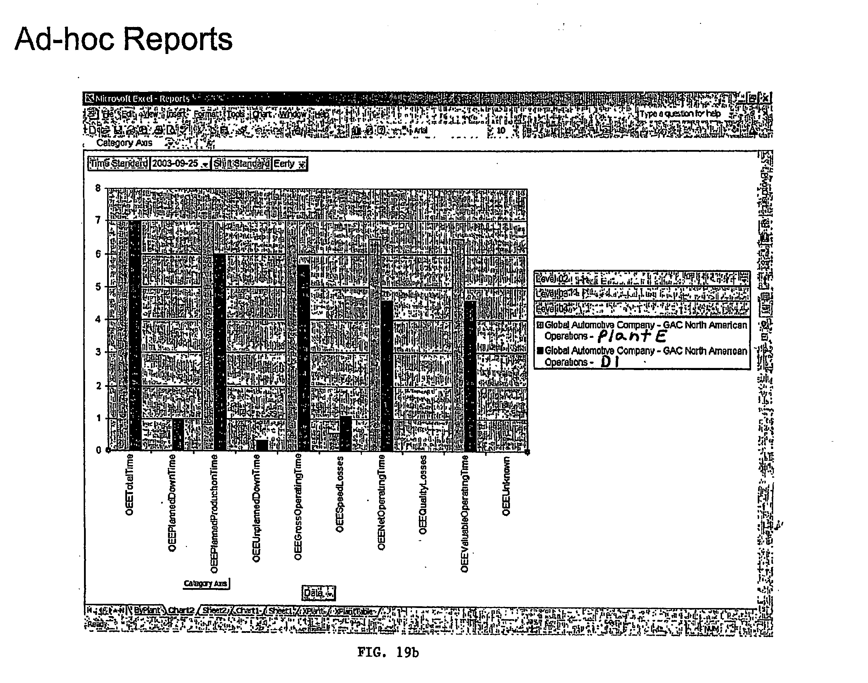

Referring now to Figs. 19a and 19b, there are shown two examples of the view for use in the operation and recommissioning lifecycle phases, known as "Ad-hoc Reports." Ad-hoc reports are meant to help explore the data available from long-term process data history. The user can choose from multiple dimensions (e.g., time, product, asset, location) any range (e.g., from the time dimension, day, week, month, quarter, year) of data and display corresponding results (e.g. machine failures, production numbers.) These reports allow side-by-side comparison of similar items (single assets, production lines, or complete plants) at different locations.

Fig. 19a shows an ad-hoc report of the state of all of the assets in two different manufacturing facilities of the same enterprise on a particular day. Fig. 19b shows an ad-hoc report of the down time, production time, and net and valuable operating time that all of the assets in two different manufacturing facilities of the same enterprise underwent on the morning shift of a particular day. The BizTalk and Business Intelligence Accelerator software available as of the filing date of this patent application from Microsoft are examples of a product that has this reporting capability.

Another example of a scheduled or ad hoc report is the benchmarking report where the asset used in one plant of the enterprise to perform a particular function can be benchmarked against the use of an asset of the same type in another plant of the enterprise to perform the same function. The areas of interest for benchmarking include, but are not limited to, asset lifetime, number of reports and machine states of the asset. This kind of analysis can be offered either in the embodiment of the present invention where the server is hosted by the asset supplier or in the embodiment where the server is located at an enterprise facility or at a facility external to the enterprise but not hosted by the asset supplier. In the embodiment of the present invention where the server is hosted by the asset supplier, the supplier can also offer to the enterprise benchmarking of the asset in comparison with use by other enterprises of that asset.

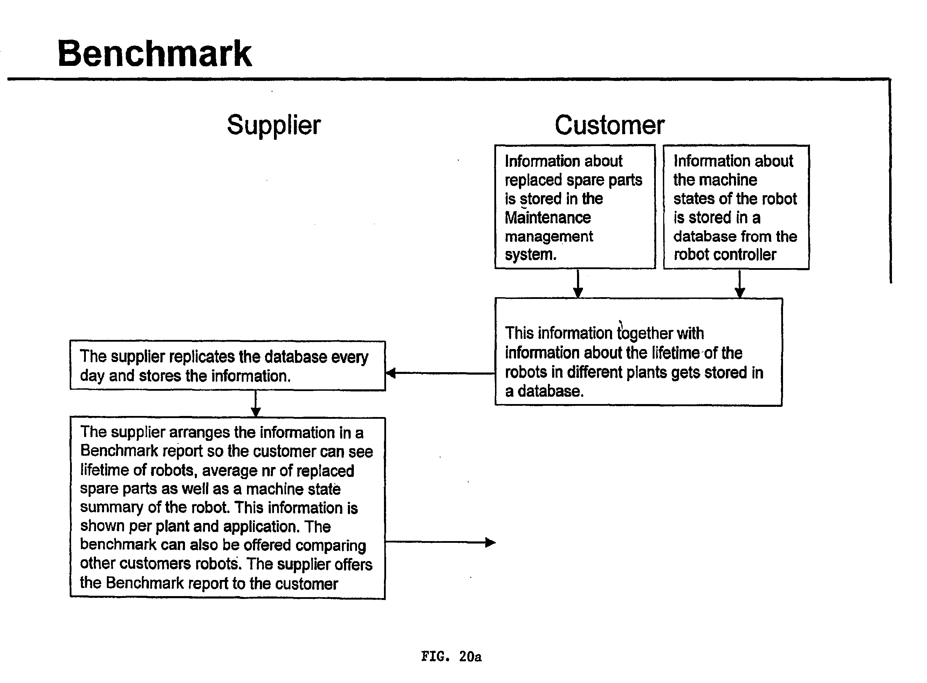

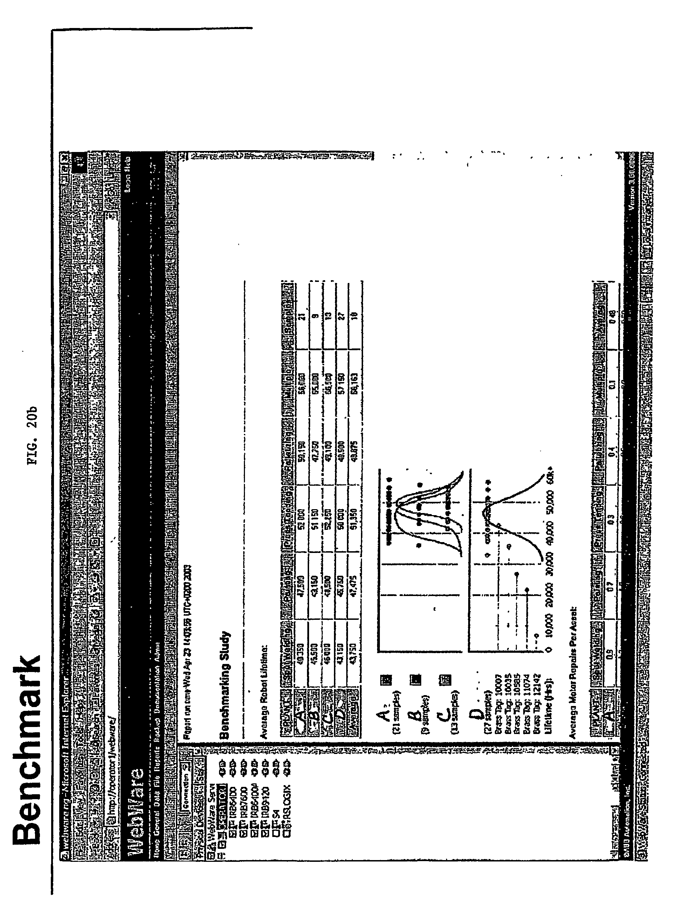

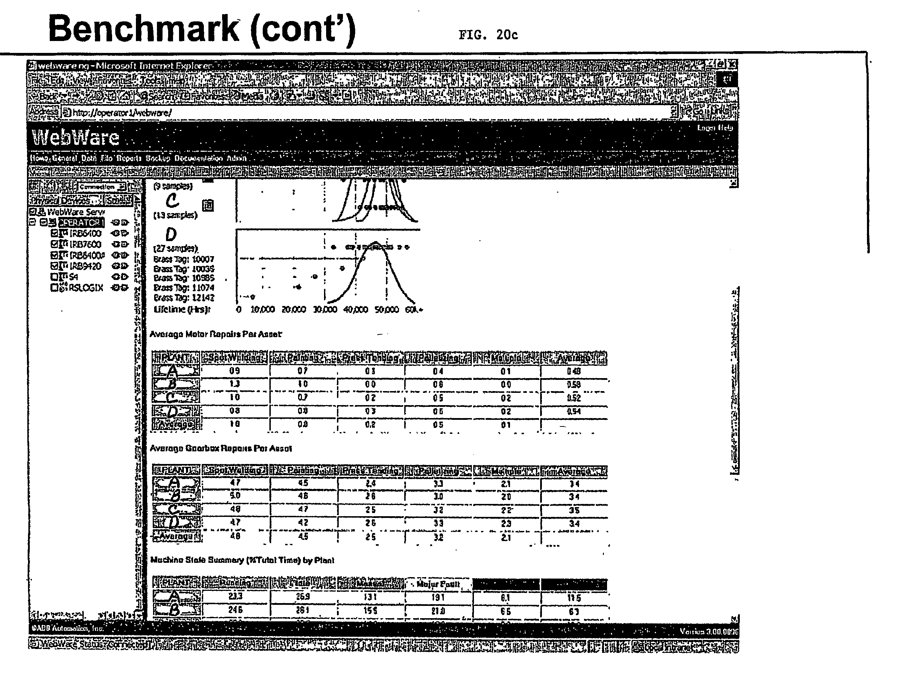

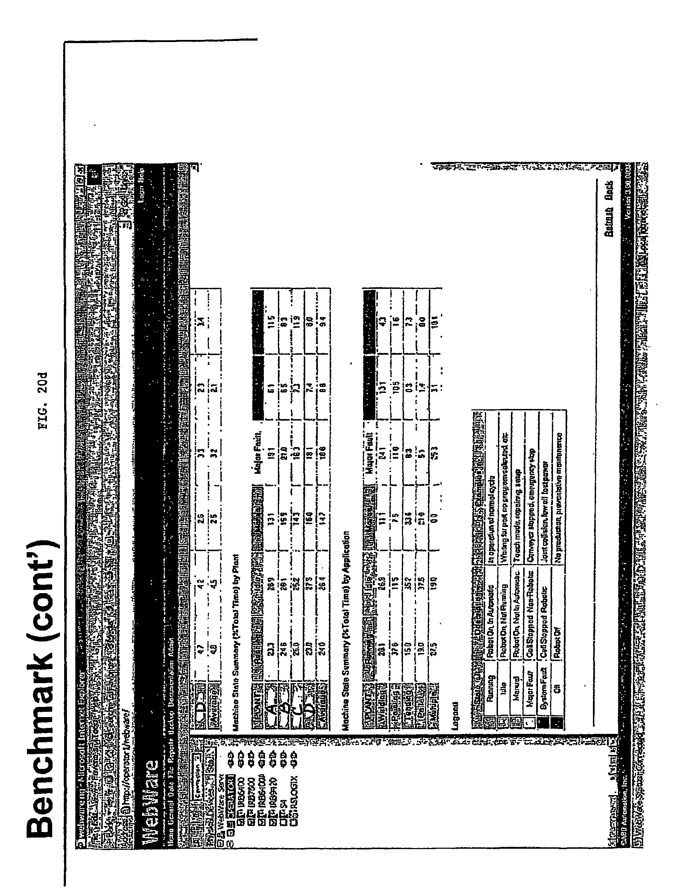

Referring now to Fig. 20a, there is shown a flowchart of the benchmarking where the server is hosted by the asset supplier. Figs. 20b, 20c and 20d show screenshots for a benchmarking study. As is shown in the table and graphs of Fig. 20b, industrial robots used by an automobile manufacturer in four of its plants to perform the function of spot welding or painting or press tending or palletizing or a multiple function are benchmarked against each other to show the average robot lifetime in each plant for each function. Thus the present invention offers the enterprise the ability to visualize how the assets, which in this example are industrial robots, are driven in different production plants and also to visualize how long a robot will live.

As is shown in Fig. 20c, which is a continuation of the screenshot of Fig. 20b, industrial robots performing the same functions as the robots in Fig. 20b in the same four plants as in Fig. 20b are benchmarked against other to show the average motor repairs per robot and the average gearbox repairs per robot. Fig. 20d, which is a continuation of the screenshot of Fig. 20c, shows the benchmarks of machine state summary in percentage total time either by plant for the same four plants as in Figs. 20b and 20c or by application for the same five applications as in Figs. 20b and 20c.

The manufacturer of the robot and the enterprise user may have an agreement that provides that the manufacturer pays or compensates the user when the robot is out of order and the user's production is stopped. The present invention provides the ability to register reasons for these stops and the ability for the robot manufacturer to tell whether or not certain production stops have appeared due to robot failures.

It should be appreciated that the benchmarking shown in Figs. 20b to 20d is an aspect which is either on the hosted enterprise level server or a local server and the report is not web compliant.

The user may use an asset first in one application and then in one or more other applications. This use of an asset is known as the re-commissioning the asset. The user in performing the re-commissioning of the asset may not know how the asset was previously used and therefore has difficulties in judging what service should the asset receive to function optimally in its new use. The user will need to know the actual software versions in the asset, a summary of the machine states, which parts have been replaced, when is the next maintenance predicted and the priorities in servicing the asset, that is, which parts should be serviced first. The present invention provides the user of the asset with a complete usage history of the asset including all the information described above either in the embodiment of the present invention where the server is hosted by the asset supplier or in the embodiment where the server is located at an enterprise facility or at a facility external to the enterprise but not hosted by the asset supplier.

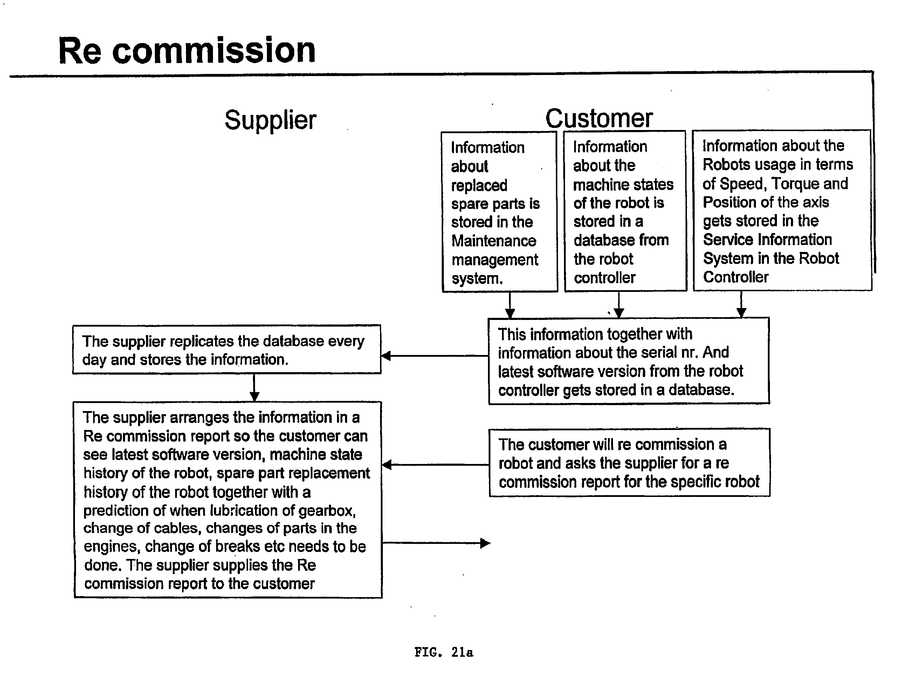

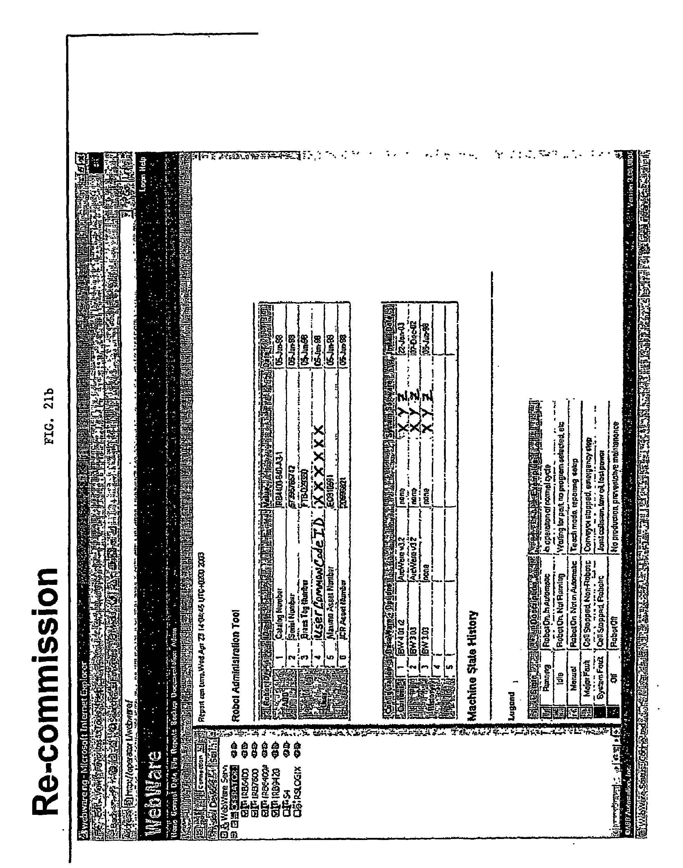

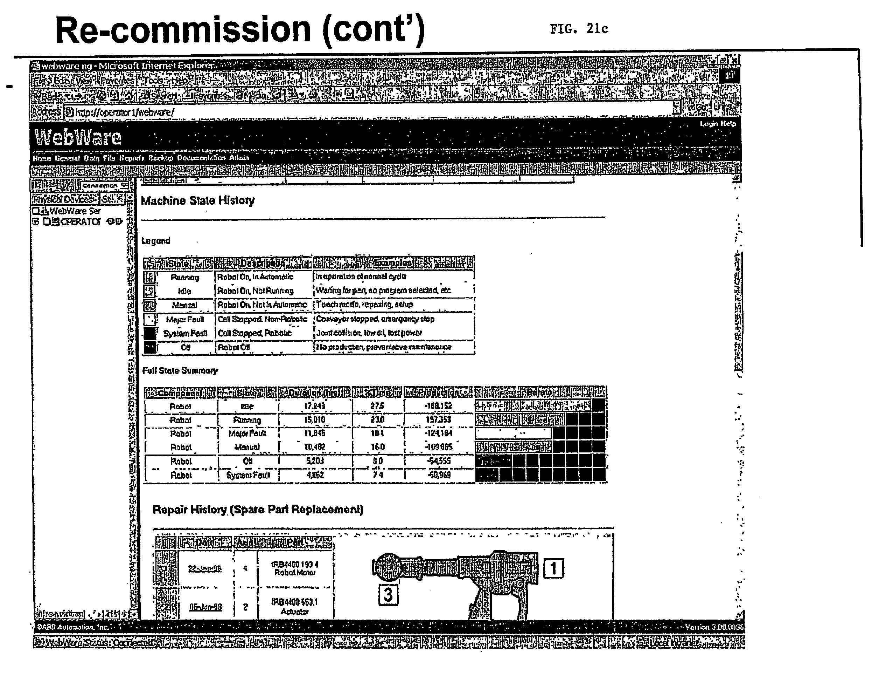

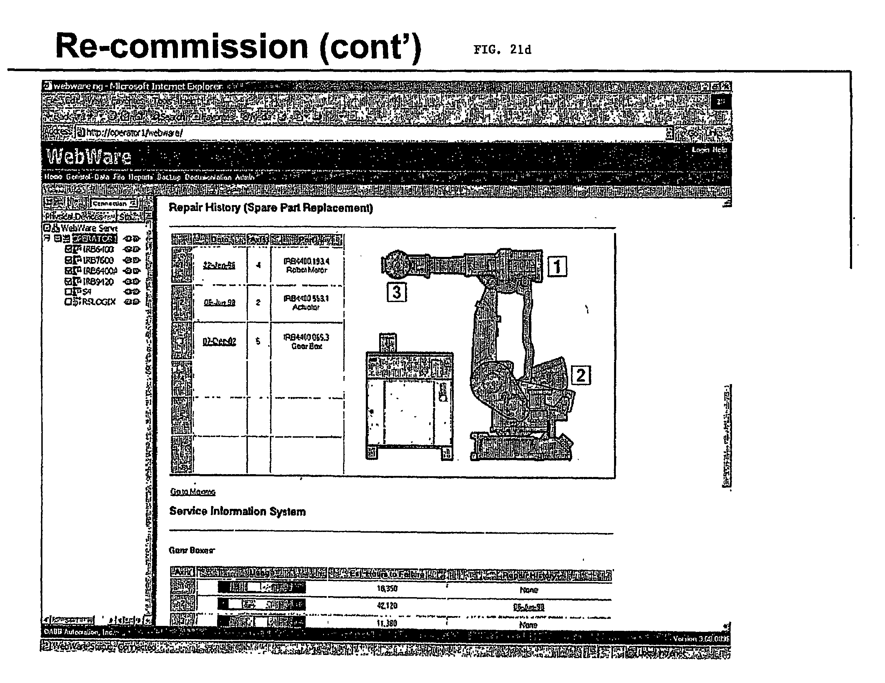

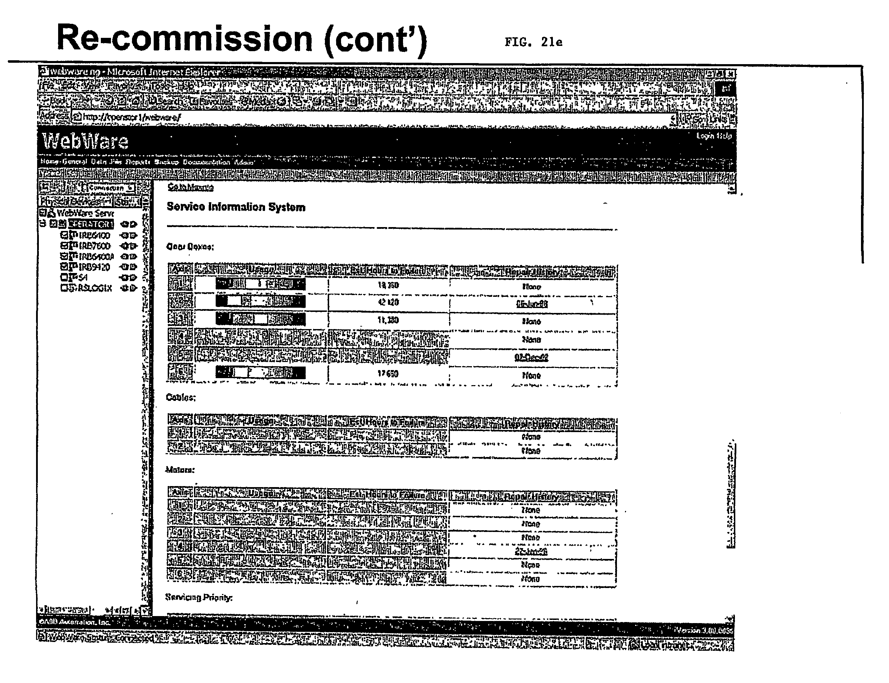

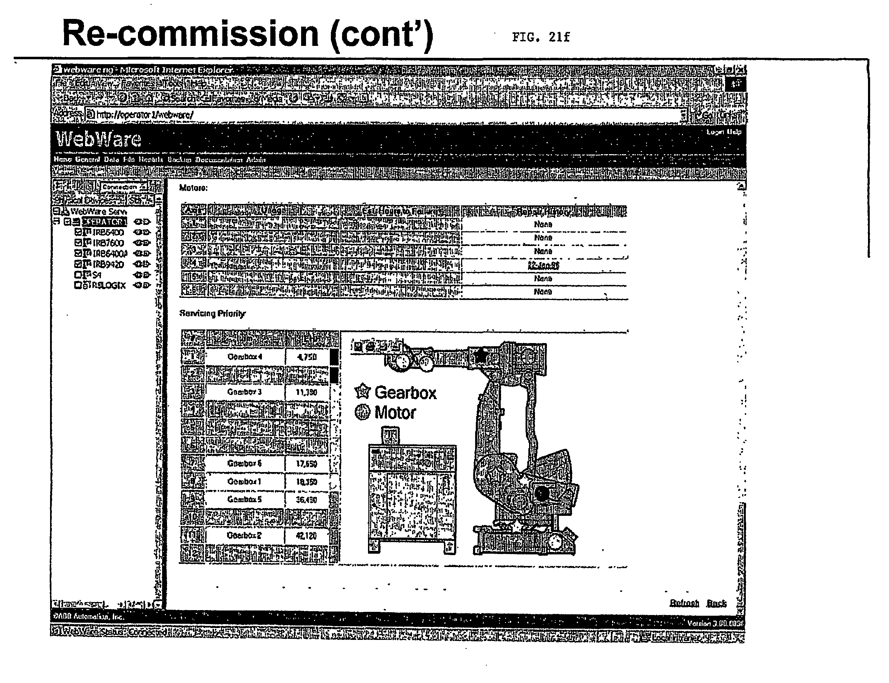

Fig. 21a shows in the form of a flowchart the re-commissioning feature of the present invention where the server is hosted by the asset supplier. Figs. 21b, 21c, 21d, 21e and 21f show screenshots for the re-commissioning feature. The screenshots show a survey of the life of an industrial robot. The robot when first put into use in an enterprise plant was given a unique name and it has kept that unique name when put to other uses thereby allowing its life history to be available. The life survey serves as a "health check-up" of the robot before it is re-commissioned. It should be appreciated that this "health check-up" of the robot can be made at any time but is of highest interest to the user of the robot when the user is re-commissioning the robot.

Fig. 21b identifies the robot to be re-commissioned. Fig. 21c shows the amount of time that the robot has been in different states. Fig. 21d shows the spare parts that have been exchanged during the lifetime of the robot to be re-commissioned. Fig. 21e shows the service information for the robot's gearbox, for example, when the oil needs to be changed in those gearboxes. Fig. 21f shows the gearbox that needs to have its oil changed first.

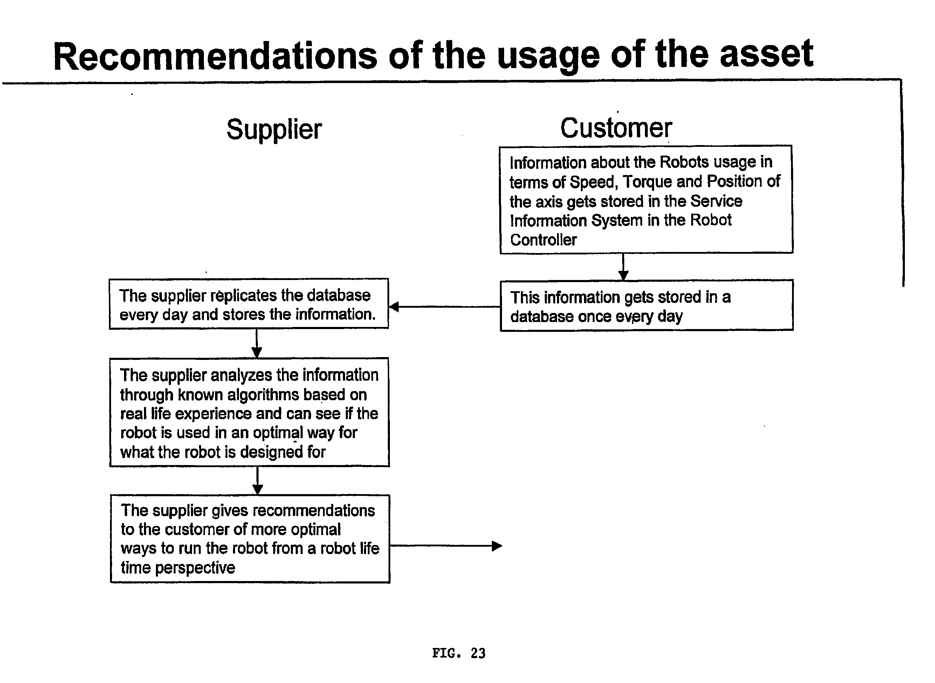

The user of an asset might not be aware that the program the asset is performing is not optimal from an asset performance point of view. The present invention allows the supplier to provide that information to the user. As is shown in the flowchart of Fig. 23, information about the robot usage such as speed, torque and position of the axis are stored in a database in the robot controller and are made available to the supplier on a predetermined schedule such as for example once per day. The supplier uses known algorithms to analyze the data to determine if the robot is being used in the optimal way to perform the function that the robot is designed to perform and if not provides to the user recommendations on more optimal ways to run the robot from the perspective of robot lifetime.

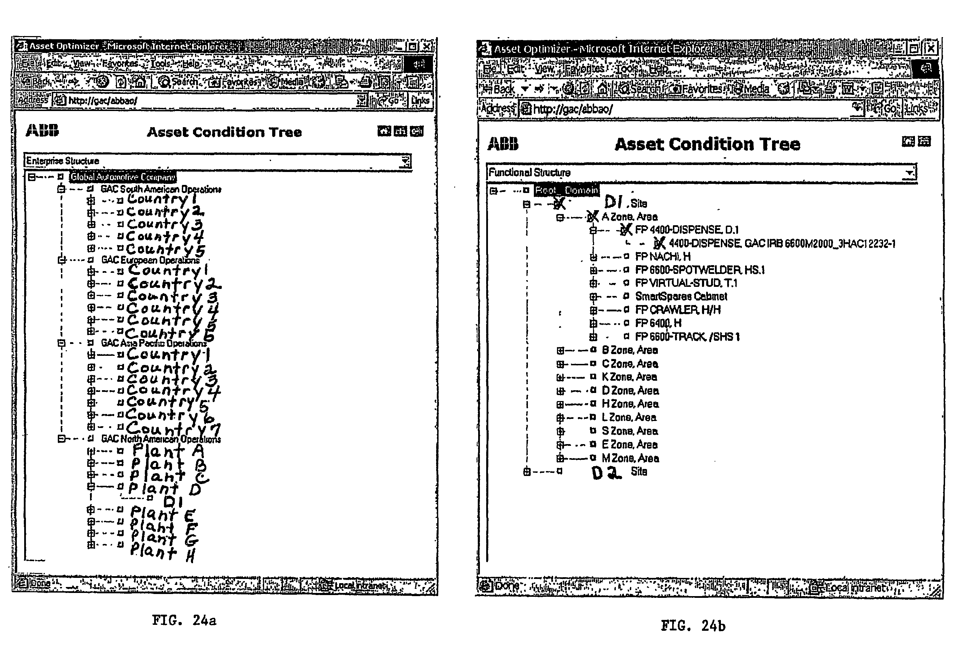

All of the screen shots described above can be view on the local servers 16 and 18 of Fig. 1. Enterprise level server 20 of Fig. 1 is connected to the local servers either by an intranet or by an external network such as the internet depending on where that server is located. A web page known as the "Asset Condition Tree" and shown in Figs. 24a and 24b is available on the enterprise level server 20. The user of that server be it the supplier of the assets to the enterprise if the server is hosted by the supplier or the enterprise can see all of the assets in any facility or part thereof by selecting in Fig. 24a the facility and part thereof in a manner well known in the art. The user can then as is shown in Fig. 24b see in the selected facility or part thereof all of the assets in that location. By right clicking on any one of the assets shown in Fig. 24b the user can then through the enterprise lever server can obtain any of the screen shots described above.

It is to be understood that the description of the preferred embodiment(s) is (are) intended to be only illustrative, rather than exhaustive, of the present invention. Those of ordinary skill will be able to make certain additions, deletions, and/or modifications to the embodiment(s) of the disclosed subject matter without departing from the scope of the invention, as defined by the appended claims.

## Claims

1. A method for managing a plurality of industrial assets (12a, 12n, 14a, 14n) used by an enterprise (10) and having an associated life cycle with a plurality of phases, the method comprising:
- recording data from said plurality of assets (12a, 12n, 14a, 14n) during their operation in one or more of said associated plurality of life cycle phases in corresponding servers (16, 18) locally associated with a facility (12, 14)in which respective assets (12a, 12n, 14a, 14n) are located;
- transferring said recorded data to an enterprise level server (20);
- allowing said recorded data to be available for viewing either at the corresponding local server (16, 18) or said enterprise level server (20) in a form that provides to a user information about said plurality of assets (12a, 12n, 14a, 14n) and one or more of said life cycle phases associated with said plurality of assets (12a, 12n, 14a, 14n);
**characterized in**
**that** it further comprises benchmarking at said enterprise level server (20) from said information provided to a user at least a first asset of said plurality of assets (12a, 12n, 14a, 14n) performing a function against at least a second asset of said plurality of assets (12a, 12n, 14a, 14n) performing the same function, said first and second assets being located at two respective different facilities.

2. The method of claim 1
**characterized in**
**that** said enterprise level server (20) is hosted by a supplier of said assets (12a, 12n, 14a, 14n) to said enterprise (10).

3. The method of claim 1
**characterized in**
**that** said enterprise level server (20) is hosted either by said enterprise (10) or at a non-asset supplier facility external to said enterprise (10).

4. The method according to one or more of the preceding claims
**characterized in**
**that** it said first and second assets are located in two respective different facilities (12, 14) belonging to said enterprise (20).

5. The method according to one or more of the claims 1-3
**characterized in**
**that** it comprises benchmarking at said enterprise level server (20) from said information provided to a user at least a first of said plurality of assets (12a, 12n, 14a, 14n) used by said enterprise (20) against at least a second asset used by another enterprise.

6. A system for managing a plurality of industrial assets (12a, 12n, 14a, 14n) which are located at least in a first and in a second facility and have an associated life cycle with a plurality of phases, said system comprising:
- a first local server and a second local server (16, 18) which are positioned in said first facility and in said second facility, respectively, said first and second servers (16, 18) being suitable for recording data from the assets (12a, 12n, 14a, 14n) respectively associated therewith during their operation in one or more of said associated plurality of life cycle phases;
- an enterprise level server (20) where said recorded data are transferred to from said first and second servers (16, 18);
- means for allowing said recorded data to be available for viewing either at said local servers (16, 18) or said enterprise level server (20) in a form that provides to a user information about said assets (12a, 12n, 14a, 14n) and one or more of said life cycle phases associated with said plurality of assets (12a, 12n, 14a, 14n);
**characterized in**
**that** it comprises means for benchmarking at said enterprise level server (20) from said information provided to a user at least a first asset of said plurality of assets (12a, 12n, 14a, 14n) performing a function against at least a second asset performing the same function, said first and second assets being located in two respective different facilities.

## Patentansprüche

1. Verfahren zum Verwalten von mehreren industriellen Sachanlagen (12a, 12n, 14a, 14n), die von einem Unternehmen (10) benutzt werden und einen zugehörigen Lebenszyklus mit mehreren Phasen aufweisen, das Verfahren aufweisend:
- Aufzeichnen von Daten von den mehreren Sachanlagen (12a, 12n, 14a, 14n) während des Betriebs derselben in einer oder mehreren der zugehörigen mehreren Lebenszyklusphasen in entsprechenden Servern (16, 18), die lokal zu einer Einrichtung (12, 14) gehören, in der sich die entsprechenden Sachanlagen (12a, 12n, 14a, 14n) befinden;
- Übertragen der aufgezeichneten Daten an einen Server (20) auf Unternehmensebene;
- Ermöglichen, dass die aufgezeichneten Daten zum Ansehen zur Verfügung stehen, entweder am entsprechenden lokalen Server (16, 18) oder an dem Server (20) auf Unternehmensebene, in einer Form, die einem Benutzer Informationen über die mehreren Sachanlagen (12a, 12n, 14a, 14n) und eine oder mehrere zu den mehreren Sachanlagen (12a, 12n, 14a, 14n) gehörenden Lebenszyklusphasen bereitstellen;
**dadurch gekennzeichnet,**
**dass** es ferner an dem Server (20) auf Unternehmensebene, anhand von den dem Benutzer bereitgestellten Informationen, das Vergleichen von mindestens einer ersten Sachanlage der mehreren Sachanlagen (12a, 12n, 14a, 14n), die eine Funktion ausübt, gegenüber mindestens einer zweiten Sachanlage der mehreren Sachanlagen (12a, 12n, 14a, 14n), die dieselbe Funktion ausübt, aufweist, wobei sich die erste und die zweite Sachanlage in zwei entsprechend unterschiedlichen Einrichtungen befinden.

2. Verfahren nach Anspruch 1,
**dadurch gekennzeichnet,**
**dass** der Server (20) auf Unternehmensebene bei einem Lieferanten der Sachanlagen (12a, 12n, 14a, 14n) zu dem Unternehmen (10) untergebracht ist.

3. Verfahren nach Anspruch 1,
**dadurch gekennzeichnet,**
**dass** der Server (20) auf Unternehmensebene entweder bei dem Unternehmen (10) oder bei einer Einrichtung eines Lieferanten, der keine Sachanlagen liefert, außerhalb des Unternehmens (10) untergebracht ist.

4. Verfahren nach einem oder mehreren der vorhergehenden Ansprüche,
**dadurch gekennzeichnet,**
**dass** sich die ersten und zweiten Sachanlagen in zwei entsprechend unterschiedlichen Einrichtungen (12, 14), die zu dem Unternehmen (10) gehören, befinden.

5. Verfahren nach einem oder mehreren der Ansprüche 1 bis 3, **dadurch gekennzeichnet,**
**dass** es an dem Server (20) auf Unternehmensebene, anhand von den dem Benutzer bereitgestellten Informationen, das Vergleichen von mindestens einer ersten Sachanlage der mehreren Sachanlagen (12a, 12n, 14a, 14n), die von dem Unternehmen (10) benutzt wird, gegenüber mindestens einer zweiten Sachanlage, die von einem anderem Unternehmen benutzt wird, aufweist.

6. System zum Verwalten von mehreren industriellen Sachanlagen (12a, 12n, 14a, 14n), welche sich in mindestens einer ersten und in einer zweiten Einrichtung befinden und einen zugehörigen Lebenszyklus mit mehreren Phasen aufweisen, das System aufweisend:
- einen ersten lokalen Server und einen zweiten lokalen Server (16, 18), welche sich in der ersten Einrichtung, beziehungsweise der zweiten Einrichtung befinden, wobei der erste und der zweite Server (16, 18) geeignet sind zum Aufzeichnen von Daten von den dazu jeweilig zugehörigen Sachanlagen (12a, 12n, 14a, 14n) während des Betriebs derselben in einer oder mehreren der zugehörigen mehreren Lebenszyklusphasen;
- einen Server (20) auf Unternehmensebene, auf den die aufgezeichneten Daten von dem ersten und dem zweiten Server (16, 18) übertragen werden;
- Mittel zum Ermöglichen, dass die aufgezeichneten Daten zum Ansehen zur Verfügung stehen, entweder an den lokalen Servern (16, 18) oder an dem Server (20) auf Unternehmensebene, in einer Form, die einem Benutzer Informationen über die Sachanlagen (12a, 12n, 14a, 14n) und eine oder mehrere zu den mehreren Sachanlagen (12a, 12n, 14a, 14n) gehörenden Lebenszyklusphasen bereitstellt;
**dadurch gekennzeichnet,**
**dass** es Mittel zum Vergleichen an dem Server (20) auf Unternehmensebene, anhand von den einem Benutzer bereitgestellten Informationen, von mindestens einer ersten Sachanlage der mehreren Sachanlagen (12a, 12n, 14a, 14n), die eine Funktion ausübt, gegenüber mindestens einer zweiten Sachanlage, die dieselbe Funktion ausübt, aufweist, wobei sich die erste und die zweite Sachanlage in zwei entsprechend unterschiedlichen Einrichtungen befinden.

## Revendications

1. Procédé destiné à gérer une pluralité de biens industriels (12a, 12n, 14a, 14n) utilisés par une entreprise (10) et possédant un cycle de vie associé comportant une pluralité de phases, le procédé comprenant :
- l'enregistrement de données provenant de ladite pluralité de biens (12a, 12n, 14a, 14n) au cours de leur exploitation dans une ou plusieurs phases de ladite pluralité de phases de cycle de vie associées dans des serveurs correspondants (16, 18) associés localement à une installation (12, 14) dans laquelle se trouvent les biens respectifs (12a, 12n, 14a, 14n),
- le transfert desdites données enregistrées vers un serveur (20) de niveau entreprise,
- la possibilité pour lesdites données enregistrées d'être consultables soit sur le serveur local correspondant (16, 18) soit sur ledit serveur (20) de niveau entreprise sous une forme qui fournit des informations à un utilisateur concernant ladite pluralité de biens (12a, 12n, 14a, 14n) et une ou plusieurs phases de ladite pluralité de phases de cycle de vie associées à ladite pluralité de biens (12a, 12n, 14a, 14n),
**caractérisé**
**en ce qu'**il comprend en outre l'exécution d'une analyse comparative sur ledit serveur (20) de niveau entreprise à partir desdites informations fournies à un utilisateur d'au moins un premier bien de ladite pluralité de biens (12a, 12n, 14a, 14n) exécutant une fonction par rapport à au moins un deuxième bien de ladite pluralité de biens (12a, 12n, 14a, 14n) exécutant la même fonction, lesdits premier et deuxième biens se trouvant dans deux installations respectives différentes.

2. Procédé selon la revendication 1
**caractérisé en ce que**
ledit serveur (20) de niveau entreprise est hébergé par un fournisseur desdits biens (12a, 12n, 14a, 14n) à ladite entreprise (10).

3. Procédé selon la revendication 1
**caractérisé en ce que**
ledit serveur (20) de niveau entreprise est hébergé soit par ladite entreprise (10) soit dans une installation externe à ladite entreprise (10) et n'appartenant pas à un fournisseur de biens.

4. Procédé selon une ou plusieurs des revendications précédentes
**caractérisé en ce que**
lesdits premier et deuxième biens se trouvent dans deux installations respectives différentes (12, 14) appartenant à ladite entreprise (10).

5. Procédé selon une ou plusieurs des revendications 1 à 3
**caractérisé**
**en ce qu'**il comprend l'exécution d'une analyse comparative sur ledit serveur (20) de niveau entreprise à partir desdites informations fournies à un utilisateur d'au moins un premier bien de ladite pluralité de biens (12a, 12n, 14a, 14n) utilisé par ladite entreprise (10) par rapport à au moins un deuxième bien utilisé par une autre entreprise.

6. Système destiné à gérer une pluralité de biens industriels (12a, 12n, 14a, 14n) qui se trouvent au moins dans une première et une deuxième installations et qui possèdent un cycle de vie associé comportant une pluralité de phases, ledit système comprenant :
- un premier serveur local et un deuxième serveur local (16, 18) qui sont positionnés respectivement dans ladite première installation et dans ladite deuxième installation, lesdits premier et deuxième serveurs (16, 18) étant adaptés pour enregistrer des données provenant des biens (12a, 12n, 14a, 14n) respectivement associés à ceux-ci au cours de leur exploitation dans une ou plusieurs des phases de ladite pluralité associée de phases de cycle de vie,
- un serveur (20) de niveau entreprise vers lequel lesdites données enregistrées sont transférées à partir desdits premier et deuxième serveurs (16, 18),
- un moyen permettant auxdites données enregistrées d'être consultables soit sur lesdits serveurs locaux (16, 18) soit sur ledit serveur (20) de niveau entreprise sous une forme qui fournit à un utilisateur des informations concernant lesdits biens (12a, 12n, 14a, 14n) et une ou plusieurs desdites phases de cycle de vie associées à ladite pluralité de biens (12a, 12n, 14a, 14n),
**caractérisé**
**en ce qu'**il comprend un moyen d'exécuter une analyse comparative sur ledit serveur (20) de niveau entreprise à partir desdites informations fournies à un utilisateur d'au moins un premier bien de ladite pluralité de biens (12a, 12n, 14a, 14n) exécutant une fonction par rapport à au moins un deuxième bien exécutant la même fonction, lesdits premier et deuxième biens se trouvant dans deux installations respectives différentes.
